**Europäisches Patentamt**

**European Patent Office**

**Office européen des brevets**

(19)

(11) Veröffentlichungsnummer: **0 258 357 B1**

(12) # EUROPÄISCHE PATENTSCHRIFT

(45) Veröffentlichungstag der Patentschrift:
16.10.91 Patentblatt 91/42

(51) Int. Cl.$^5$: **A61C 11/00**

(21) Anmeldenummer: **87901469.4**

(22) Anmeldetag: **27.02.87**

(86) Internationale Anmeldenummer:
**PCT/EP87/00119**

(87) Internationale Veröffentlichungsnummer:
**WO 87/05202 11.09.87 Gazette 87/20**

(54) **GERÄT ZUR ANFERTIGUNG VON OBER- UND UNTERKIEFER-TOTALPROTHESEN.**

(30) Priorität: 27.02.86 DE 8605333 U
27.06.86 DE 8617182 U
23.09.86 DE 8625405 U

(43) Veröffentlichungstag der Anmeldung:
09.03.88 Patentblatt 88/10

(45) Bekanntmachung des Hinweises auf die
Patenterteilung:
16.10.91 Patentblatt 91/42

(84) Benannte Vertragsstaaten:
AT BE CH DE FR GB IT LI LU NL SE

(56) Entgegenhaltungen:
DE-A- 2 909 719
NL-A- 8 501 029
US-A- 2 234 411
US-A- 2 270 561
US-A- 3 913 230

(73) Patentinhaber: Ludwigs, Horst
Lenbachstrasse 33
W-4800 Bielefeld 1 (DE)

(72) Erfinder: Ludwigs, Horst
Lenbachstrasse 33
W-4800 Bielefeld 1 (DE)

(74) Vertreter: Hanewinkel, Lorenz, Dipl.-Phys.
Patentanwalt Ferrariweg 17a
W-4790 Paderborn (DE)

EP 0 258 357 B1

## Beschreibung

Die Erfindung bezieht sich auf ein Gerät zur Anfertigung von Ober- und Unterkiefer-Totalprothesen.

Aus der DE-A-2 909 719 ist ein Gerät zum Aufstellen von Zähnen bei Prothesen bekannt geworden, welches auf einem Unterteil ein Ober- oder Unterkiefermodell aufnimmt und an einem schwenkbaren Oberteil eine Kalotte trägt, die ein erleichtertes Aufstellen der Zähne in richtiger Stellung ermöglichen soll.

Dieses bekannte Gerät ist nur für das Aufstellen der Zähne jeweils nach einer entsprechenden Kalotte ausgelegt und ermöglicht keine weiteren zahn- und labortechnischen Arbeiten.

Aufgabe der Erfindung ist es, ein Gerät mit auswechselbar einsetzbaren Ausricht-, Einstell- und Meßinstrumenten zu schaffen, wodurch für jeden Patienten individuell sämtliche geometrisch wichtigen Punkte erfaßt und danach optimal sitzende Prothesen bei vereinfachter Arbeitsweise und hoher Genauigkeit in den einzelnen Arbeitsgängen angefertigt werden können.

Diese Aufgabe wird durch das Gerät mit den in dem Patentanspruch 1 aufgeführten Punkten a) bis f) gelöst.

Die sich an den Patentanspruch 1 anschließenden Unteransprüche 2 bis 20 beinhalten Gestaltungsmerkmale, die förderliche und vorteilhafte Weiterbildungen der Aufgabenlösung darstellen.

Es ist zwar aus der US-A-2 270 561 ein Artikulator zur Anfertigung von Gebißprothesen bekannt geworden, der einsetzbare Instrumente in Form einer höheneinstellbaren Basisplatte, einer Kalotte und von Höhenanzeigestiften zeigt, die jedoch nur Aufstellhilfen für die Zähne bilden und nicht für die Erfassung wichtiger geometrischer Punkte vorgesehen sind, sondern nach vorgegebenen Werten eingestellt werden bzw. sind.

Das erfindungsgemäße Gerät schließt einen Instrumententräger und daran und darin auswechselbar gehaltene, miteinander und mit dem Instrumententräger zusammenwirkende Hilfsinstrumente ein, wodurch bei leichter Handhabung ein genaues Einstellen für die durchzuführenden einzelnen Arbeitsgänge bei optimal genauer Arbeitsausführung ermöglicht worden ist.

Der als Einstell- und Nivelliergerät zusammenstellbare Instrumententräger ermöglicht in einfacher und sicherer Weise eine eindeutige Fixierung von Unterkiefermodellen zur Herstellung von Bißschablonen bzw. das anschließende Einstellen in den zur Aufstellung zu verwendenden Artikulator.

Durch einen in der Höhe sowie in der Neigung in jeder Richtung einstellbaren Nivelliertisch und einen im Instrumententräger adaptierbaren Einrichtschlüssel sowie durch die Möglichkeit, die Unterkiefermodelle auf dem Nivelliertisch in horizontaler Ebene zu justieren und durch Magnetkraft zu fixieren ist es möglich, die drei maßgeblichen Einrichtpunkte gezielt im Rahmen der Geometrie des zu verwendenden Artikulators zu erfassen. Weiterhin ist durch eine am Gerät festlegbare Bißwallschablone die Bißwallhöhe genau einzurichten und auch in den Bißwall eine Zentrikschreibplatte für eine Stützstiftregistrierung zu integrieren.

In gleicher Weise läßt sich das Oberkiefermodell justieren, jedoch unter Verwendung der beiden Rachenbläserfalten sowie der Umschlagfalte im Lippenbändchenbereich als Einrichtpunkte. Des weiteren läßt sich auch beim Oberkiefermodell in Verbindung mit einer am Instrumententräger festlegbaren Bißwallschablone die Bißwallhöhe des Oberkiefers kauebenenbezogen definieren.

Durch dieses Gerät wird für jeden patienten indivuduell die geometrisch richtige Lage der Ober- und Unterkiefermodelle innerhalb der Artikulationsgeometrie erfaßt, so daß danach optimal sitzende prothesen gefertigt werden können.

Durch die kalottenförmige Aufstellhilfe können die Zähne in ihrer Neigung entsprechend der durch die Kalotte gebildeten Kompensationskurve auf die ZentralfissurenLinie, die bezogen auf die genommenen Werte des Unterkiefermodelles genau definiert mittels der eingestellten Einsätze festgelegt wird, aufgestellt werden. Durch die einfache und beliebige Verstellung des bzw. der Einsätze ist ein genaues Einrichten auf die Zentralfissuren-Linie möglich. Die lagerichtige Stellung der Zähne, bezogen auf den Kieferkamm, ist durch die klarsichtigen Einsätze genau überprüfbar.

Weiterhin kann durch die Aufstellhilfe der rechte bzw. linke untere Frontzahn (1. Zahn) in eine den Kieferkamm im Rahmen der gewonnenen Grenzen des Abdruckes formenmäßig und flächig überdeckende Wachsbasis lagerichtig aufgestellt werden. Diese Aufstellhilfe ist auf eine Mittellinie und in sagittaler Richtung an einem Halter einfach und genau einstellbar und bildet eine Anstellfläche für den 1. linken oder rechten Zahn, so daß dieser lagegenau und dann die sich anschließenden 2. und 3. Zähne ebenfalls lagerichtig aufgestellt werden könne.

Durch dieses lagerichtige Aufstellen wird auch das Einrichten von Einsätzen mit Markierungslinien auf die Zentralfissuren-Linie für das Aufstellen der übrigen unteren Zähne erleichtert. Weiterhin ermöglicht der Einrichtbalken ein genaues Einstellen auf die Rachenbläserfalte, auch bei unterschiedlich großen und asymmetrischen Oberkiefermodellen.

Anhand der Zeichnungen werden nachfolgend Ausführungsbeispiele gemäß der Erfindung näher erläutert. Es zeigt:

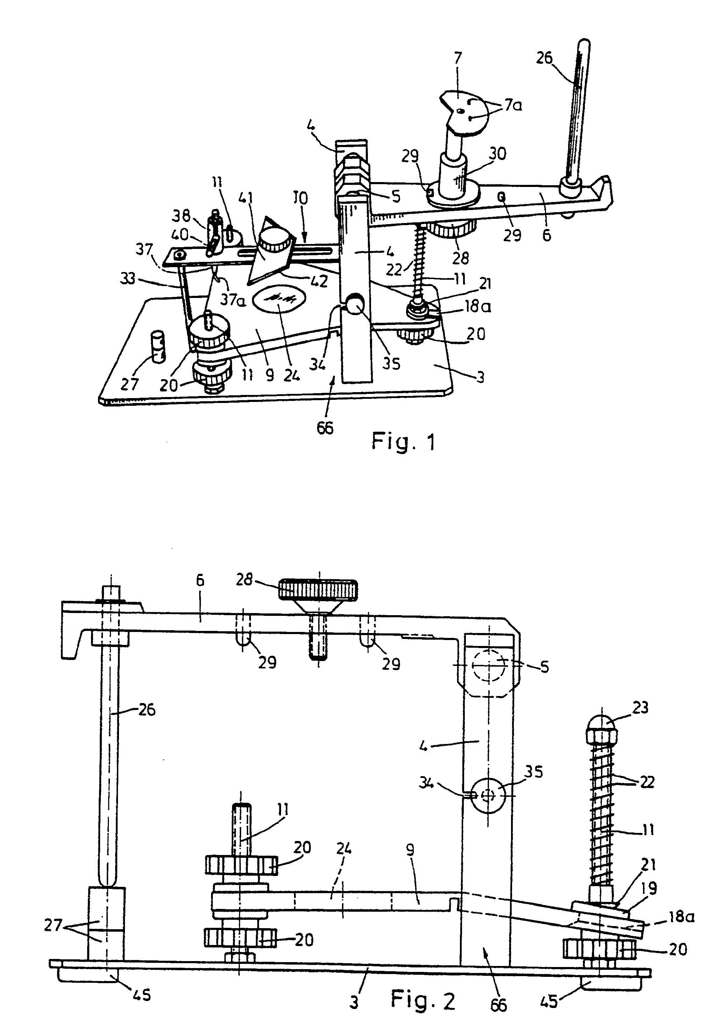

Fig. 1 eine perspektivische Ansicht des Instrumententrägers zur Fixierung bzw. Justierung von Unter- bzw. Oberkiefermodellen mit einer Grundplatte, einem darauf angebrachten, einstellbaren Nivelliertisch, einem an den Säulen der Grundplatte schwenkbar gehaltenen Klapparm zur wahlweisen Befestigung von Bißwallstempelplatten, Modellsockelplatten oder von Einrichtschlüsseln zur Unterkiefer- bzw. Oberkiefer-Justierung. Die Abbildung zeigt in diesem Falle einen an den Säulen abnehmbar festlegbaren Einrichtschlüssel zur Justierung von Unterkiefern sowie eine am schwenkbaren Klapparm angebrachte Bißwallstempelplatte zur Bestimmung der Bißwallhöhe bei Unter- bzw. Oberkiefern;

Fig. 2 eine Seitenansicht desselben Gerätes bei heruntergeschwenktem Klapparm und ohne Einrichtschlüssel;

Fig. 3 eine Seitenansicht desselben Gerätes bei hochgeschwenktem Klapparm und eingesetztem Einrichtschlüssel;

Fig. 3a eine Stirnansicht im teilweisen Schnitt der Nivelliertischlagerung;

Fig. 4 eine Stirnansicht desselben Gerätes mit eingesetztem Einrichtschlüssel und heruntergeschwenktem Klapparm;

Fig. 5 eine Seitenansicht desselben Gerätes mit eingesetztem Einrichtschlüssel und auf dem Nivelliertisch angeordnetem Unterkiefermodell;

Fig. 6 eine Draufsicht auf dasselbe Gerät mit Einrichtschlüssel und Unterkiefermodell und hochgeschwenktem Klapparm;

Fig. 7 eine Seitenansicht des Einrichtschlüssels für Unterkiefer zur Säulenadaption;

Fig. 7a eine Stirnansicht eines Teils des Einrichtschlüssels entsprechend Fig. 7 mit geführter und in einem begrenzten Bereich drehbarer Lehre;

Fig. 8 eine Seitenansicht eines an einem Adapter festgelegten Einrichtschlüssels zur Unterkieferjustierung in einer Ausführung zur Befestigung am schwenkbaren Klapparm des Instrumententrägers;

Fig. 9 eine Draufsicht auf den Einrichtschlüssel nach Fig. 8;

Fig. 10 eine Stirnansicht im teilweisen Schnitt der verstellbaren Nivelliertischlagerung auf der Grundplatte;

Fig. 11 eine Draufsicht auf das Gerät mit angebrachtem Nivelliertisch sowie mit hochgeschwenktem Klapparm und am Klapparm befestigter STempelplatte mit Zentrikplatte;

Fig. 11a eine Draufsicht auf die Zentrikplatte mit gezeichnetem gothischen Bogen;

Fig. 12 eine Seitenansicht des Gerätes mit angebrachtem Nivelliertisch, heruntergeschwenktem Klapparm und daran gehaltener Stempelplatte zur Bißwallhöhenbestimmung;

Fig. 13 eine Seitenansicht einer an einem Adapter befestigten Stempelplatte in weiterer Ausführung;

Fig. 14 eine Draufsicht auf die Stempelplatte nach Fig. 13;

Fig. 15 eine Seitenansicht im teilweisen Schnitt des Gerätes mit angebrachtem Nivelliertisch und heruntergeschwenktem Klapparm und daran befestigter Sockelplatte;

Fig. 16 eine Draufsicht auf das Gerät mit hochgeschwenktem Klapparm mit Sockelplatte und angebrachtem Nivelliertisch;

Fig. 17 einen Querschnitt durch ein Oberkiefermodell mit Funktionslöffel und daran gehaltener Stütz- und Justierschraube;

Fig. 18 eine Seitenansicht eines mittels eines Adapters am Klapparm lösbar gehaltenen, in sagittaler Richtung verschiebbaren und zusätzlich um die vertikale Achse schwenkbaren Einrichtbalkens mit Richtkante zur Erfassung der Rachenbläserfalten sowie einer in seinem vorderen Teil angebrachten gegabelten Stützstift zur Erfassung der Umschlagfalte im Lippenbändchenbereich des Oberkiefermodells;

Fig. 19 eine Draufsicht auf den Einrichtschlüssel nach Fig. 18;

Fig. 20 eine Seitenansicht des Instrumententrägers mit einer an dem Klapparm festgelegten Aufstellhilfe für Unterkiefer-Totalprothesen in der Gebrauchsstellung;

Fig. 21 eine Draufsicht auf einen kalottenartig gewölbten Halter und zwei Einsätze der Aufstellhilfe, wobei ein Einsatz am Halter festgelegt und der andere abgenommen ist;

Fig. 22 eine Stirnansicht im Querschnitt des Halters mit Einsatz gemäß Fig. 21;

Fig. 23 eine Stirnansicht eines Einsatzes;

Fig. 24 eine Seitenansicht eines Einsatzes;

Fig. 25 eine Seitenansicht des Halters mit Einsatz;

Fig. 26 einen Querschnitt durch den an einem Adapter befestigten und gleichzeitig zwei Einsätze aufnehmenden Halter;

Fig. 27 eine Seitenansicht des Halters mit Einsätzen nach Fig. 26;

Fig. 28 eine schematische Draufsicht auf die beiden Zentralfissuren-Linien des Unterkiefers mit einer auf dem halben Unterkiefer angeordneten Zahnreihe;

Fig. 29 eine Seitenansicht des Instrumententrägers mit einer an der Aufstellhilfe festgelegten Zahnschablone;

Fig. 30 einen Querschnitt durch den Halter der Aufstellhilfe mit darin eingesteckter Zahnschablone;

Fig. 31 eine Draufsicht auf einen Teilbereich des Halters mit Zahnschablone;

Fig. 32 eine Aufsicht auf die Zähne des Oberkiefermodells mit Rachenbläserfalten und Umschlagfalte;

Fig. 32a einen Schnitt durch das Oberkiefermodell gemäß Schnittlinie I-I in Fig. 32.

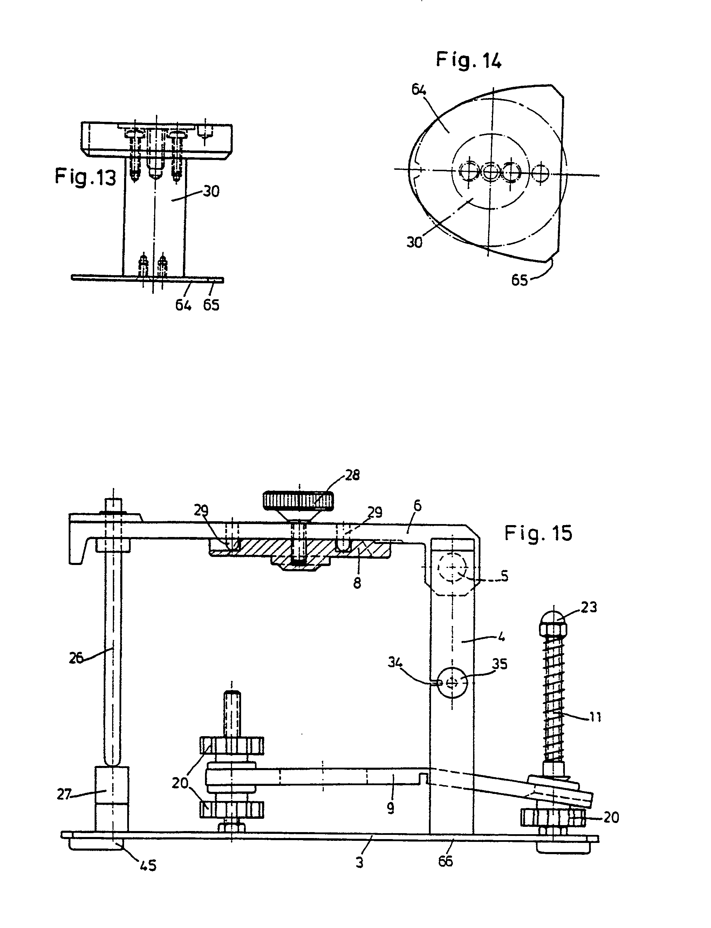

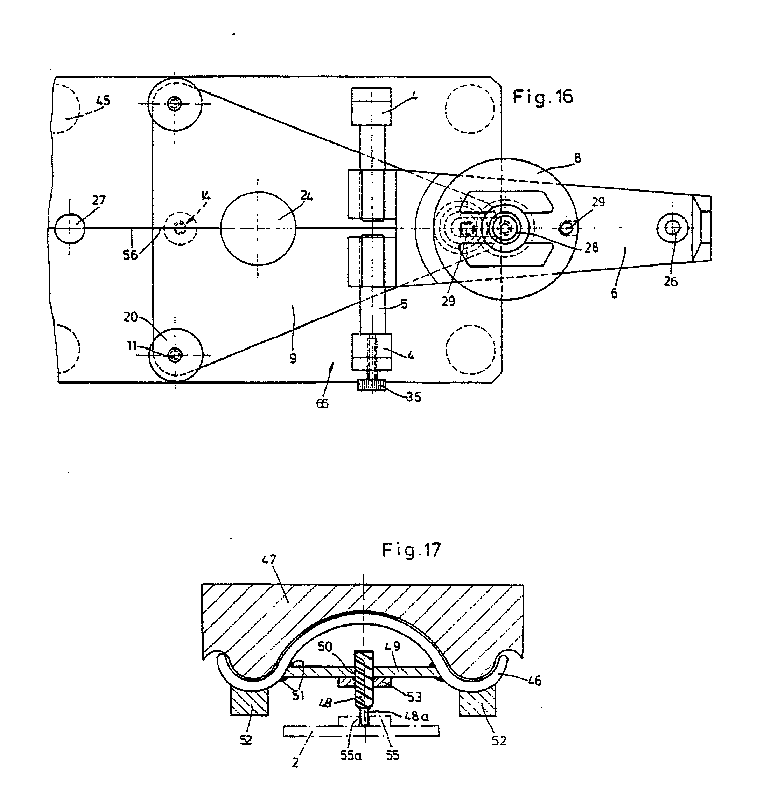

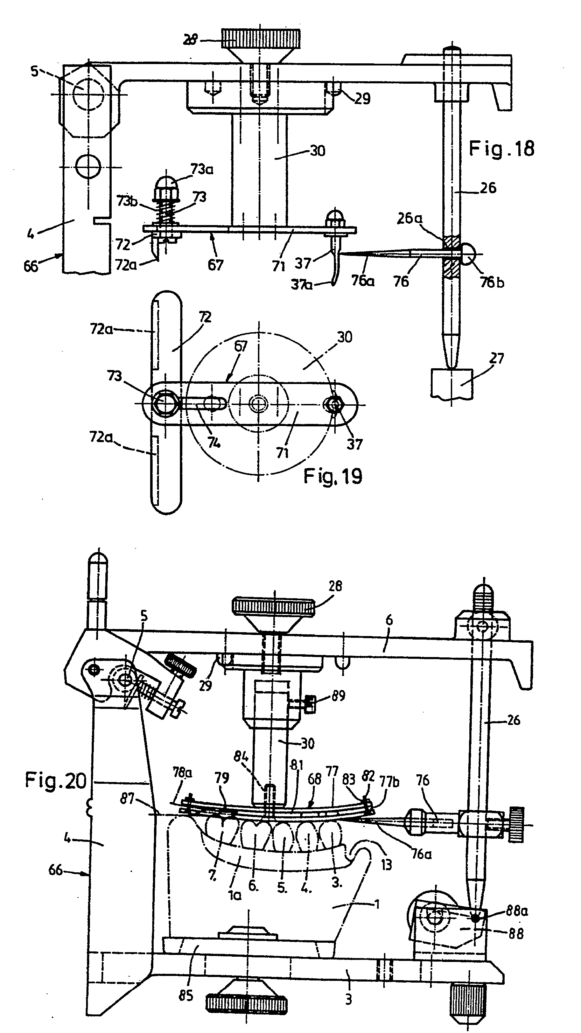

Das Gerät zur Anfertigung von Ober- und Unterkiefer-Totalprothesen weist einen Instrumententräger (66) auf, an dem für die verschiedenen Arbeitsgänge entwickelte Hilfsmittel in Form eines Nivelliertisches (9)-Fig. 1 bis 6, 10 bis 12, 15 und 16-, eines Einrichtschlüssels (10/57) mit Einstellstift (37) und Lehre (41/60)-Fig. 1, 3 bis 9-, einer Stempelplatte (7/64)-Fig. 1, 11 bis 14-, einer Sockelplatte (8)-Fig. 15 und 16, eines Einrichtbalkens (67)-Fig. 18 and 19-, einer Aufstellhilfe (68)-Fig. 20 bis 27, 29- mit Kalotte (77, 79) bzw. Zahnschablone (70) abnehmbar festlegbar sind.

Der Instrumententräger weist eine in sich ebene Grundplatte (3) mit vorzugsweise eckiger, wie rechteckiger Grundform auf, auf der sich zwei im Abstand nebeneinander angeordnete senkrechte Säulen (4) abstützen, die im letzten Drittel der Rechtecklänge der Grundplatte (3) auf dieser befestigt sind. Zwischen den beiden Säulen (4) ist in deren oberen Endbereich um eine waagerechte Achse (5) ein Klapparm (6) schwenkbar gehalten.

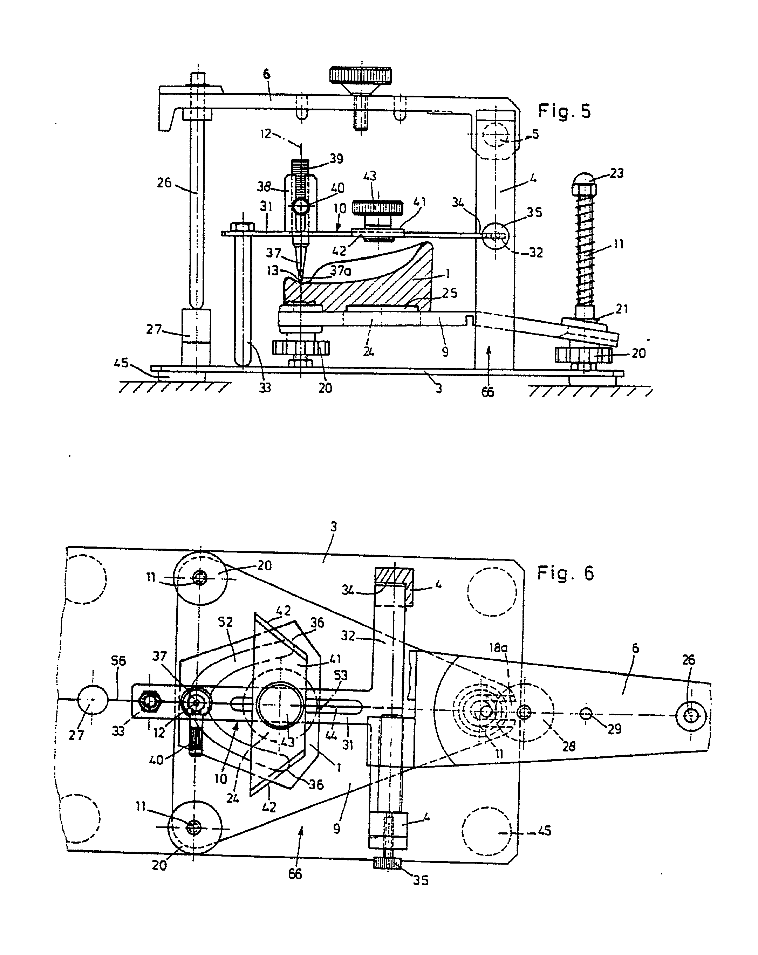

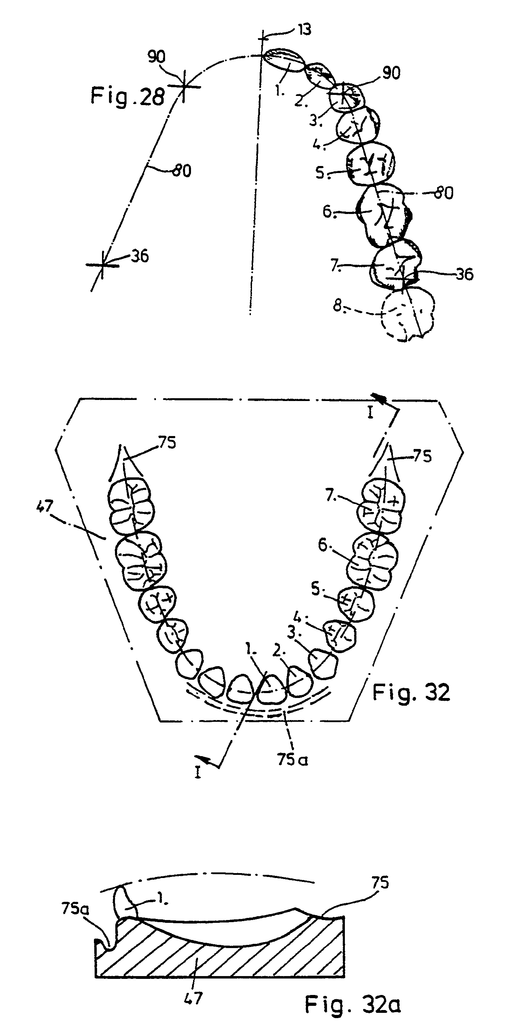

Auf der Grundplatte (3) ist ein in senkrechter Richtung stufenlos einstellbarer und in jeder Richtung stufenlos neigbarer Nivelliertisch (9) zur Aufnahme eines Unterkiefermodelles (1)-Fig. 5, 6- oder eines Oberkiefermodelles (47)-Fig. 17, 32- gelagert, und an den Säulen (4) ist im Abstand oberhalb des Nivelliertisches (9) und unterhalb des Klapparmes (6) ein Unterkirfermodell-Einrichtschlüssel (10) zur Erfassung des Symphysenpunktes und der Trigona angeordnet.

Der Nivelliertisch (9) hat in bevorzugter Weise eine dreieckige Grundform und greift mit einer Dreieckspitze zwischen die beiden senkrechten Säulen (4) hindurch, wobei dann diese Dreieckspitze in hinteren Bereich des Gerätes sich befindet und eine Dreieckquerkante in vorderen Bereich des Gerätes liegt.

Dieser Nivelliertisch (9) wird in allen drei Ecken von Nivellierspindeln (11) getragen, die es ermöglichen, jede erforderliche Neigung, sowohl sagittal als auch transversal, aber auch die Gesamthöhe des Nivelliertisches (9) genau einzustellen. Der Nivelliertisch (9) besitzt eine von einer eingefrästen Rille gebildete Mittellinie (5, 6), die auch bei Einstellung starker Neigungen nicht von der sagittalen Achse des Gerätes abweist.

Ebenso wird auch die transversale Achse, welche die Vertikalachse (12) des Symphysenpunktes (13) kreuzt, während der Einstellung des Nivelliertisches (9) nicht verlassen. Diese Eigenschaft wird durch eine vertikale Teleskopführung (14) erreicht.

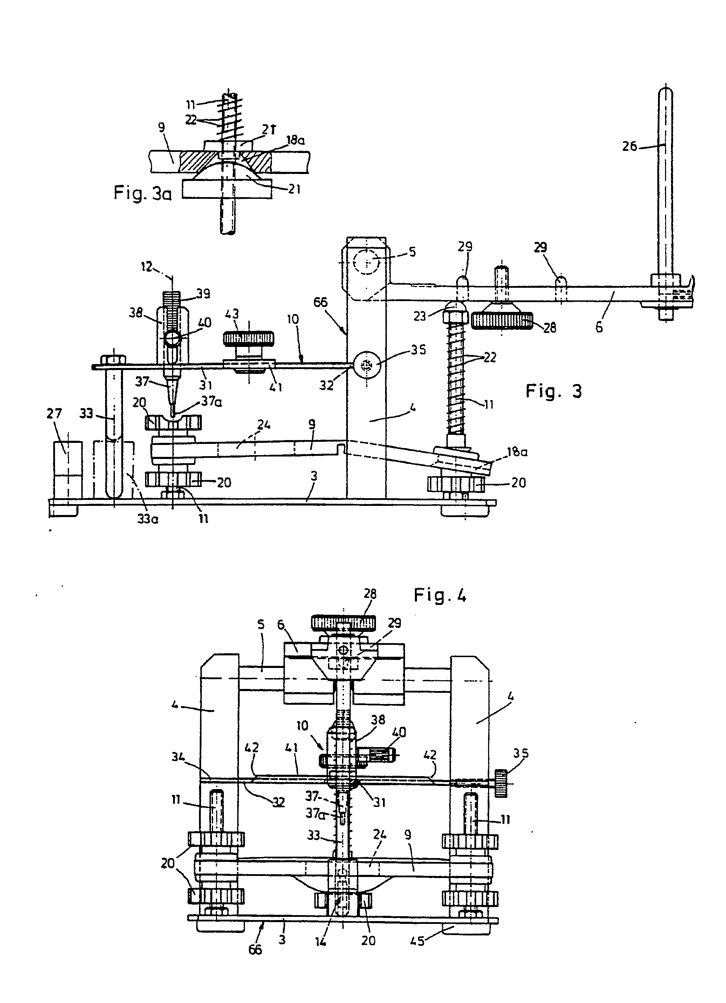

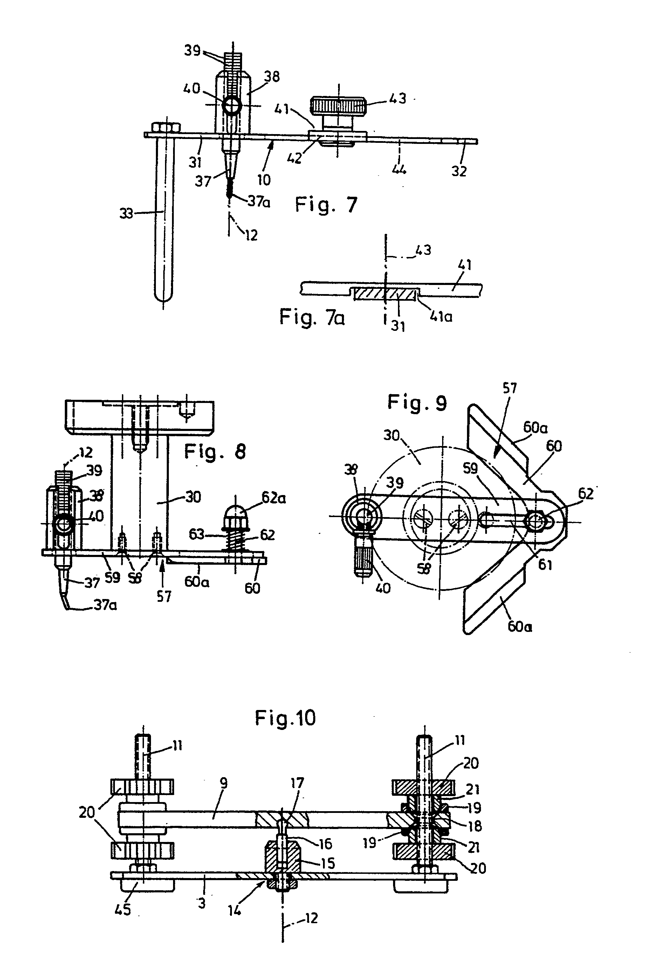

In Fig. 4 und 10 ist diese Teleskopführung (14) zu erkennen, die ein auf der Grundplatte (3) auf der vertikalen Achse (12) befestigtes Lager (15) und einen darin höhenmäßig verschiebbar eingreifenden Führungsstift (16) hat, welcher mit einem Kugelende (17) kardanisch in dem Nivelliertisch (9) gehalten ist, so daß bei der Neigungs- und Höheneinstellung des Nivelliertisches (9) in allen Richtungen eine Beweglichkeit gegeben ist, jedoch die senkrechte Achse (12) immer beibehalten wird.

Dabei ist die Kugel (17) sehr nahe an die Oberfläche (nur ein sehr geringer Abstand dazu) des Nivelliertisches (9) angeordnet, um eine sehr geringe Abweichung von der Mittellinie bei der Neigungseinstellung des Nivelliertisches (9) zu erhalten.

Alle drei Nivellierspindeln (11), vgl. Fig. 5, 6 und 10, sind auf der Grundplatte (3) senkrecht stehend befestigt und von Gewindebolzen gebildet. Der Nivelliertisch (9) hat in jeder Dreieckecke eine Bohrung (18), die im Durchmesser größer als der Durchmesser der Nivellierspindel (11) ist und mit der der Nivelliertisch (9) um die Nivellierspindeln (11) mit Spiel faßt. Ober- und unterhalb jeder Bohrung (18) zeigt der Nivelliertisch (9) je ein Kalottenlager (19)-Fig. 18-, dessen Wölbung sich in der Senkung der Bohrung (18) fortsetzt. Ober- und unterhalb des Nivelliertisches (9) ist auf jeder Nivellierspindel (11) eine Rändelmutter (20) für die Einstellung des Nivelliertisches (9) vorgesehen und jede Rändelmutter (20) greift mit einem Kalottenansatz (21) in das Lager (19) ein, so daß dadurch die Neigungseinstellung des Nivelliertisches (9) gegenüber den senkrechten Nivellierspindeln (11) möglich ist und trotzdem eine sichere Fixierung des Nivelliertisches (9) in der eingestellten Lage erreicht wird. Die in der Dreieckspitze des Nivelliertisches (9) hinter den Säulen (4) stehende Nivellierspindel (11) ist in der Höhe (Länge) größer als die beiden vorderen Nivellierspindeln (11) ausgebildet und auf dieser Nivellierspindel (11) ist nur eine untere, gegen die Unterseite des Nivelliertisches (9) einwirkende, Rändelmutter (20) angeordnet und auf die Oberseite des Nivelliertisches (9) wirkt auf das Kalottenlager (19) ein Kalottenansatz (21) ein, der unter Einwirkung einer um die Nivellierspindel (11) angeordneten Druckfeder (22) steht, die ihr oberes Widerlager an einer auf das obere Ende der Nivellierspindel (11) aufgeschraubten Hutmutter (23) findet, wobei diese Hutmutter (23) gleichzeitig ein Stützlager für den hoch- und nach hinten geschwenkten Klapparm (6) bildet und diesen dann in einer etwa waagerechten Stellung, wie in Fig. 1 gezeigt, hält. Durch die Druckfeder (22) wird die Dreieckspitze des Nivelliertisches (9) stets nach unten gehalten und die Höhenverstellung erfolgt durch die untere Rändelmutter (20).

Die Dreieckspitze des Nivelliertisches (9) weist an Stelle der Bohrung (18) einen Schlitz (18a) auf, mit dem sie um die Nivellierspindel (11) greift.

Wie aus Fig. 3a und auch aus Fig. 1, 2 und 11 zu erkennen, ist der Schlitz (18a) im Querschnitt schwalbenschwanzförmig ausgebildet und in diesen Schlitz (18a) greift von unten das Kalottenlager (21) mit seiner Wölbung ein, so daß bei Nivelliertischverstellung immer eine zentrische Auflage des Nivelliertisches (9) um die federbelastete Nivellierspindel (11) gewährleistet wird.

Es liegt im Rahmen der Erfindung, auch die beiden vorderen Nivellierspindeln (11) ohen obere Rändelmutter (20) und dafür mit einer Druckfeder (22) auszustatten (Fig. 3), so daß alle drei Nivellierspindeln (11) federbelastet ausgeführt sind. Der Nivelliertisch (9) besitzt einen Permanentmagneten (24), der etwa an der Stelle im Nivelliertisch (9) liegt, an welcher sich das Zentrum der Auflagefläche des Unterkiefermodelles (1) während der Justierung befindet. Im Unterkiefermodell (1) ist eine eisenhaltige Scheibe (25) eingelassen, so daß das Unterkiefermodell (1) durch Magnetkraft auf dem Nivelliertisch (9) fixierbar ist. Diese Art der Fixierung bietet die Möglichkeit, das zu justierende Unterkiefermodell (1) auf der horizontalen Ebene in jeder beliebigen Richtung von Hand zu verschieben und zu justieren. Durch die Magnetverbindung wird das Unterkiefermodell (1) nach jeder Justierbewegung daran gehindert, sich von der eingestellten position unbeabsichtigt wegzubewegen.

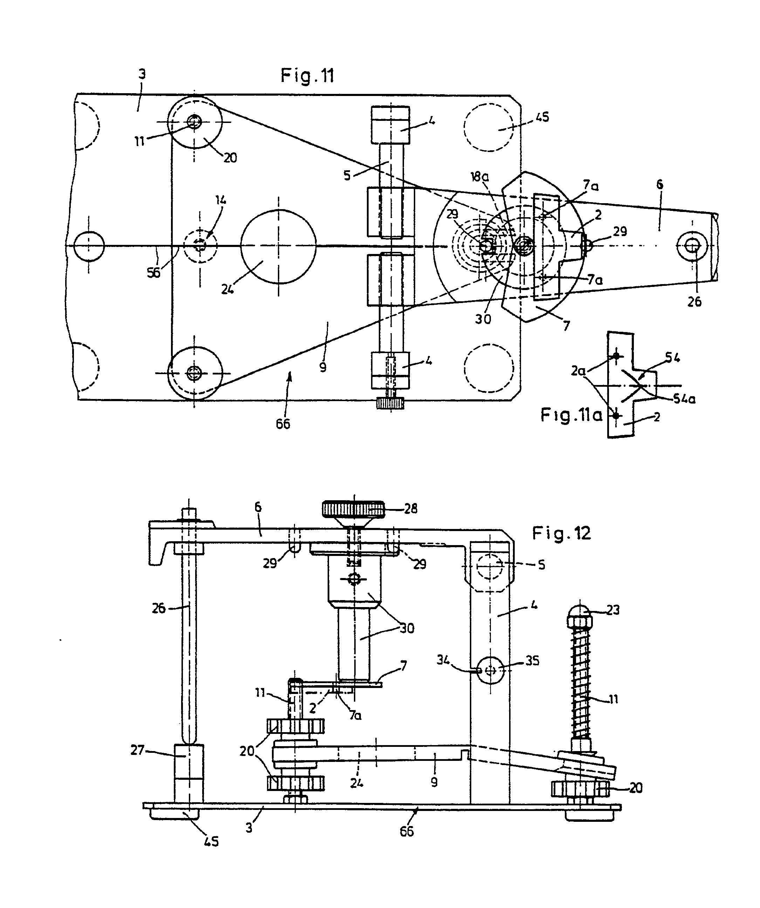

Der Klapparm (6) ist mit einem Längenende durch die waagerechte Achse (5) an den Säulen (4) schwenkbar gehalten und zeigt im anderen Längenende einen senkrecht zur Armlängsrichtung stehenden Stützbolzen (26), der im heruntergeschwenkten Zustand, vgl. Fig. 2 und 5, sich auf der Grundplatte (3) oder aber auf einem auf der Grundplatte (3) befestigten Stützlager (27) abstützt und somit im Anwendungszustand des Gerätes eine fest eingestellte Höhe hat. In dem Klapparm (6) ist eine Rändelschraube (28) und sind im Abstand dazu zwei Fixierstifte (29) vorgesehen, die zusammen mit der Rändelschraube (28) ein lagerichtiges Befestigen einer Sockelplatte (8) unter den Klapparm (6) gewährleisten, vgl. Fig. 15, und auch ein lagerichtiges Befestigen einer Stempelplatte (7) mittels eines Adapters (30), vgl. Fig. 12, ermöglichen, wobei wiederum durch den Adapter (30) die Sockelplatte (7) im heruntergeklappten Anwendungszustand des Klapparmes (6) in einer eingestellten Höhe gehalten wird.

Der Einrichtschlüssel (10), vgl. Fig. 1, 3 bis 7, hat eine in waagerechter Ebene und in Längsrichtung des Klapparmes (6) verlaufende Einstellschiene (31), die an einem Längenende mit einer quer verlaufenden Befestigungsleiste (32) direkt an den Säulen (4) lösbar festgelegt wird und sich mit ihrem anderen Längenende durch einen an der Einstellschiene (31) befestigten senkrechten Stützstift (33) auf der Grundplatte (3) abstützt und durch diese beidendseitige Halterung (32, 33) un ihrer waagerechten Lage fixiert wird.

Die beiden Säulen (4) haben etwa auf halber Höhe zwei, jeweils eine rechts und eine links vorgesehene schlitzförmige Einsteckführung (34) (Einsteckschlitz), in die der Einrichtschlüssel (10) mit seiner Befestigungsleiste (32) eingesteckt wird; in eine Säule (4) ist im Bereich des Einsteckschlitzes (34) eine Rändelschraube (35) eingeschraubt, die auf ein Stirnende der Befestigungsleiste (32) einwirkt und dadufch den EinrichtschlüsseI (10) in der Schlitzführung (34) fixiert.

Der Stützstift (33) kann sich aber auch auf einem Auflager (33a) der Grundplatte (3) abstützen (vgl. strich-punktierte Darstellung in Fig. 3), wodurch der Stift (33) kürzer ist und dadurch der Einrichtschlüssel (10) leichter in das Gerät hinein und aus demselben heraus (über das Auflager (27) hinweg) gebracht werden kann.

Der Einrichtschlüssel 10 trägt zwei einstemlbare Teile, die dazu dienen, die drei maßgeblichen Einrichtpunkte der Unterkiefermodell 1, nämlich den Symphysenpunkt 13 sowie die Zentren der beiden retromolaren Dreiecke, und zwar die Trigona 36, gezielt zu erfassen. Der Symphysenpunkt 13 ist stets auf einer der Artikulatorgeometrie lagerichtig angeordneten, vertikalen Achse 12 zu finden und läßt sich auf dieser Achse 12 im Bereich von 10 bis 25 mm unterhalb der Kauebene einstellen. Hierfür ist an der Einstellschiene 31 ein Einstellstift 37 mit einem Einstellpunkt 37a vorgesehen, wobei dieser Einstellpunkt 37a immer auf der senkrechten Achse 12 steht; der Einstellpunkt 37a ist als gerader oder gebogener Stift ausgebildet oder als Gabel ausgeführt, mit der auch bei vorhandenem Lippenbändchen eine genaue Erfassung des Symphysenpunkt es 13 möglich ist. Der Einstellstift 37 steht senkrecht und ist in einer Führungshülse 38 höhenverstellbar gehalten. Am Einstellstift 37 ist eine Millimeterskala 39 angebracht, die die Höheneinstellung erkennen läßt. Eine Feststellschraube 40 fixiert den Einstellstift 37 gegenüber der Führungshüle 38, vgl. Fig. 5 und 7.

Zur Erfassung der Trigona 36 befindet sich auf der Einstellschiene 31 des Einrichtschlüssels 10 eine trapzeförmige, in Längsrichtung der Einstellschiene 31 stufenlos verschiebbare Lehre 41, deren beide seitlichen Trapezkanten Meßkanten 42 bilden, die in der Höhe der geometrischen Kauebene liegen. Die Meßkanten 42 sind messerartig geschliffen ausgebildet.

Die Lehre 41 ist auf der Einstellschiene 31 verschiebbar geführt und durch eine Feststellschraube 43, die durch einen Längsschmitz 44 der Einstellschiene 31 faßt, in einem begrenzten Längen bereich stufenlos verschiebbar und fixierbar. Die schrägen Meßkanten 42 der Lehre 41 zeigen in ihrer Trapezverjüngung zu den Säulen 4 hin. Die Lehre 41 ist mit einem ausgefrästen Schlitz 41a auf der Einstellschiene 31 verschiebbar geführt. Dabei ist der Schlitz 41a etwas breiter als die Einstellschiene 31 ausgeführt, wodurch die Lehre 41 in horizontaler Ebene um + - 5° drehbar und somit einstellbar ist (vgl. Fig. 7a).

Mit 45 sind unter der Grundplatte 3 befestigte Füße bezeichnet.

Nachfolgend wird der chronologische Ablauf aller mit dem erfindungsgemäßen Einrichtgerät möglichen Arbeitsgänge, unter Ausklammerung des Umstandes, daß die Arbeitsschritte zu einem Teil in der Zahnarztpraxis, zum anderen Teil im zahntechnischen Labor stattfinden, beschrieben.

Das Hauptanwendungsgebiet ist im Rahmen der Anfertigung totaler oberer und unterer Prothesen (28-er) bzw. auch einzelner oberer oder unterer Totalprothesen zu finden.

Der Zahnarzt nimmt zunächst Vorabdrücke für Ober- und Unterkiefer. Von den Vorabdrücken werden zunächst Gipsmodelle hergestellt, wobei drauf zu achten ist, daß die Gipsmodelle (1 bzw. 47) an ihrer Unterseite eine magnetische Scheibe (25) planliegend erhalten.

Um eine absolut planliegende Modellunterseite zu erhalten, empfiehlt es sich, das Modell auf einer Glasplatte anzufertigen. Auf die Glasplatte wird ein Stück Polyäthylenfolie und darauf eine magnetisierbare, möglichst plangeschliffene, verzinkte Scheibe von etwa 30 bis 40 mm Durchmesser gelegt. Darauf wird der Gipssockel des Unterkiefermodells 1 gegeben und der ausgegossene Abdruck aufgebracht. Nach Aushärtung des Gipses wird das gesamte Modell mit der Folie, die anschließend durch Abziehen leicht entfernt werden kann, abgehoben. Das Modell kann rundum getrimmt werden, jedoch muß die Unterseite von dieser Maßnahme ausgespart bleiben, denn jede bereits mehrmals oder häufig gebrauchte Trimmerscheibe hinterläßt, wenn auch nur leicht, in jedem Fall jedoch eine gewölbte Fläche. Eine gewölbte Modellunterseite würde auf dem Nivelliertisch 9 des Gerätes nicht satt aufliegen und zu leicht druch Drehen aus der Position gebracht werden können. Die magnetischen Scheiben 25 in den Modellen 1 sollten außen einen Retentionsrand besitzen, so daß sie während des Gebrauchs nicht durch die Kraft des Permanentmagneten 24, der sich in dem Nivelliertisch 9 des Gerätes befindet, herausbrechen können.

Um die Gipsmodelle durch Magnetkraft auf dem Nivelliertisch zu halten, ist es nicht zwingend erforderlich, die Modell in der oben beschriebenen Weise mit einer eisenhaltigen Scheibe auszustatten. Es gibt im Handel einige sogenannte Split-Cast-Systeme, die ebenfalls permanent magnetische Systeme verwenden; sie sind deshalb ebenfalls geeignet, in Verbindung mit diesem erfindungsgemäßen Bausatz verwendet zu werden.

Anschließend sind, unter Anwendung größtmöglicher Sorgfalt, die Funktionslöffel 46 für beide Modelle (Unterkiefermodell 1 und Oberkiefermodell 47) anzufertigen. Dabei ist schon jetzt im Oberkiefermodell 47 eine Stütz- und Justierschraube 48, die zur Zentrikbestimmung über den gothischen Bogen (Pfeilwinkelregistrierung) sowie zur effektiven, individuellen Bißhöheneinstellung dient, einzusetzen (Fig. 17).

Die Herstellung der Funktionslöffel 46 erfolgt vorzugsweise mit einem selbstpolymerisierenden Kunststoff, der die höchstmögliche Detailtreue in der Wiedergabe der Konturen der Abdrücke bietet und der die Gefahr einer Verformung sowohl beim Herstellungsvorgang als auch bei der Anwendung der Funktionslöffel 46 auf ein Minimum senkt. Bei der Gestaltung des Unterkieferlöffels 46 ist unbedingt darauf zu achten, daß auf dem Kieferkamm ein genügend großer Wall aufmodelliert wird, der die Aufgabe hat, den Löffel 46 statisch zu verstärken, sowie dem anschließend anzubringenden Bißwall einen festen Halt zu geben. Die Höhe des in den Löffel 46 eingearbeiteten Verstärkungswalls darf jedoch in keiner Weise die Montage der in Verbindung mit dem Bißwall anzubringenden Zentrikplatte 2 behindern.

Im Oberkieferfunktionslöffel 46 (Fig. 17) ist bereits bei der Herstellung die Stütz- und Justierschraube 48 zur Zentrik- und Bißhöhenbestimmung anzubringen. Dazu ist ein Metallband 49, das im Zentrum seiner Fläche eine Gewindebohrung 50 zur Aufnahme der Stütz- und Justierschraube 48 besitzt, horizontal in transversaler Richtung so in den Kunststoff einzuarbeiten, daß die Gewindebohrung 50 sich in einem Abstand von etwa 15 mm von der Mitte des Kieferkamms in sagittaler Richtung befindet.

Die Befestigung des Metallbandes 49 erfolgt mit ein paar Tropfen 51 des gleichen Kunststoffs, aus dem der Löffel 46 selbst gefertigt wurde. Anschließend ist ein Bißwalm 52 aus einem Silicon besonders hoher Härte (vorzugsweise mit einer Härte von ca. shore A 90 ) aufzubauen. Hierzu wird in ähnlicher Weise verfahren wie es bereits zur Bißwallherstellung für den Unterkiefer beschrieben wurde, jedoch ist zur Justierung des Modells der Einrichtschlüssel nach Fig. 18 bzw. 19 und zur Festlegung der Bißwallhöhe die Bißwallstempelplatte nach Fig. 13 bzw. 14 zu verwenden.

Die ausgehärteten Silikonwälle, sowohl für den Oberkiefer wie auch für den Unterkiefer lassen sich leicht mit einem Messer auf die endgültige Breite zurückschneiden, wobei selbstverständlich die durch die Bißwallstempel festgelegte Höhe der Wälle nicht angetastet werden darf. Die obere Fläche der Wälle sollte eine Breite von etwa 5 bis 6 mm haben und die gleiche Position einnehmen in der sich voraussichtlich bei den fertiggestellten Prothesen die Zahnreihen befinden werden. Am Fuß der Bißwälle sollte eine Aussparung in Richtung Kieferkamm eingeschnitten werden, die lingual/palatinal wie labial rund um die Wälle verläuft und dazu dient, bei der späteren Funktionsabformung überschüssiges Abformmaterial aufzunehmen, un dadurch übermäßipe Extension zu vermeiden.

Zum Schluß sind alle durch das Schneiden entstandene Kanten mit einem rotierenden Stein, einer Fräse oder einem rotierenden Schleifpapierstreifen zu glätten.

Das Unterkiefermodell 1 wird im Einrichtgerät justiert. Der bereits angefertigte Funktionslöffel 46 wird zunächst zur Seite gelegt und kommt erst nach der Justierung wieder zur Anwendung.

Am Modell 1 werden die drei markanten Punkte, nämlich im vorderen Umschlagfaltenbereich der Symphysenpunkt 13 sowie die beiden retromolaren Dreiecke 36 im hinteren Bereich mit einem Markierungsstift angezeichnet. Außerdem wird eine Markierung 53 angebracht, welche bei Ansicht von oben die Mittelachse des Modells 1 markiert, die sich auf einer Linie befindet, die vom den Symphysenpunkt 13 und hinten die Achse zwischen den beiden Trigoni 36 in der Mitte kreuzt. Diese Markierungen genügen bereits um das Modell 1 lagerichtig zu justieren.

Der Einrichtschlüssel 10 wird so vorbereitet, daß die trapezförmige Lehre 41 bis an den Einstemmstift 37 des Symphysenpunktes 13 nach vom gezogen wird. Der Einstellpunkt 37a des Einstellstiftes 37 wird auf den Mittelwert, von 16 mm vertikaler Höhe von der Kauebene bis zum Symphysenpunkt 13, eingestellt. Das markierte Modell 1 wird jetzt auf den Nivelliertisch 9 gesetzt, der zuvor mit den Nivellierspindeln 11 etwas abgesenkt wurde, um das anschließende Einsetzen nicht durch ein zu hoch aufragendes Modell 1 zu behindern. Der Einrichtschlüssel 10 wird bis zum Anschlag in die vorgesehenen Führungsschlitze 34 der Säulen 4 besteckt und mit der an der rechten Säule 4 befindlichen Klemmschraube 35 gesichert.

Nun beginnt der eigentliche Nivelliervorgang:

Das Modell 1 wird von Hand so auf den Nivelliertisch 9 positioniert, daß der markierte Symphysenpunkt 13 in vertikaler Richtung unterhalb des Einstellpunktes 37a zu liegen kommt. Dabei ist auf die Lage der Mittelmarkierung 53 an der hinteren Kante des Modells 1 zu achten, die sich aus vertikaler Sicht von oben mit der Mittellinie 56 des Nivelliertisches 9 decken sollte.

Um zur Nivellierung genügend freien Platz auf den Nivellierspindeln 11 zu erhalten, werden die oberen Rändelmuttern 20 der beiden vorderen Nivellierspindeln 11 weit nach oben gedreht. Die beiden unteren Rändelmuttern 20 werden nun gleichzeitig, um das Modell 1 nicht aus der vorläufigen Waage zu bringen, nach oben gedreht, bis der Symphysenpunkt 13 des Modells 1 an den Einstellstift 37 anstößt, ohne dabei den Stützstift 33 ganz vorn am Einrichtschlüssel 10 von der Grundplatte 3 abzuheben.

Die Rändelmutter 20 der hinteren Nivellierspindel 11 wird nun so weit verstellt, nach oben bzw. unten, bis die beiden Trigona 36 des Modells 1 sich auf der Höhe der Kauebene befinden. Um das festzustellen, wird die trapezförmige Lehre 41 auf dem Einrichtschlüssel 10 mit ihren Meßkanten 42 so nah wie möglich an die markierten Zentren der Trigona 36 auf dem Modell 1 herangeführt und mit der entsprechenden Stellschraube 43 fixiert. Ein prüfender Blick, parallel zur Kauebene, also unterhalb der trapezförmigen Lehre 41 entlang, gibt Auskunft darüber, ob sich die Markierungen 36 in der richtigen Höhe, nämlich auf Kauebenenniveau, befinden.

Stellt sich heraus, daß sich die Markierungen 36 in unterschiedlicher Höhe befinden, wird das Modell 1 durch Verstellen der beiden vorderen, unteren Rändelmuttern 20 in die Waage gebracht. Um nur die transversale Neigung zu verstellen, ist je nach gewünschter Richtung, die eine der beiden Muttern 20 abzusenken, die andere jedoch um den gleichen Betrag anzuheben bzw. umgekehrt. Ein Anheben z. B. der linken Mutter 20 und Absenken der rechten, führt zu einer Anhebung des linken und einer Absenkung des rechten Trigonums 36, während die eingestellte Höhe des Symphysenpunktes 13 erhalten bleibt. Mit der Rändelmutter 20 der hinteren Nivellierspindel 11 läßt sich die Höhe des trigonalen Bereichs insgesamt korrigieren.

Wichtig ist es, daß nach dem Nivelliervorgang die horizontale Position des Modells 1 überprüft und ggf. korrigiert wird, da jede Neigungsänderung zwar die entsprechenden Punkte auf dem Nivelliertisch 9 in ihrer horizontalen Position festhält, die Markierungen der Modelle 1 jedoch, sie befinden sich einen gehörigen Teil über dem Niveau des Nivelliertisches 9, wandern deshalb mit jeder Neigungsänderung geringfügig von ihrer Position ab. Die horizontale Korrektur nach jedem Nivelliervorgang ist deshalb unumgänglich und von Hand unter Berücksichtigung sowohl der Mittelmarkierung 53 im hinteren Teil des Modells 1, als auch des Symphysenpunktes 13 von Hand auszuführen. Es ist empfehlenswert, während des Nivellierens bzw. der horizontalen Korrektur von Hand die trapezförmige Lehre 41 geringfügig von den Markierungen der Trigona 36 zu entfernen, um Behinderungen durch feststehende Teile des Gerätes zu vermeiden.

Nachdem der Nivelliervorgang beendet ist, werden die beiden oberen Rändelmuttern 20 der vorderen Nivellierspindeln 11 nach unten angedreht, um die Einstellung eindeutig zu fixieren. Der Einrichtschlüssel 10 kann jetzt entfernt werden und das Modell 1 steht bereit zur kauebenenbezogenen Montage des Bißwalls. Wenn die vorderen Nivellierspindeln 11 federbelastet ausgeführt sind, erübrigen sich die oberen Rändelmuttern 20 als Kontermuttern.

Zur Herstellung des Bißwalls empfiehlt es sich, ein Silicon von besonders hoher Härte zu benutzen (z. B. mit einer Härte von ca. Shore A 90). Das Silicon wird entsprechend der Dosieranweisung mit dem Härter gemischt, zu einem Strang von ca. 1,5 bis 2 cm Durchmesser geformt und anschließend den auf dem Löffel 46 erkennbaren Konturen des Kieferkamms folgend auf den Funktionslöffel 46 aufgebracht. Der Wall 52 ist bereits jetzt mit der Hand annähernd in die gewünschte Form zu bringen, wobei darauf zu achten ist, daß der provisorisch handgeformte Wall 52 die voraussichtliche Endhöhe um ca. 2 bis 3 mm überragt.

Die bereits zuvor in den aufgeschwenkten Klapparm 6 des Gerätes eingesetzte Bißwall-Stempelplatte (-schablone) 7 wird nach vorn geklappt und unter mäßigem Druck auf den Siliconbißwall 52 gedrückt (Fig. 17). Die Stempelplatte 7 begrenzt die Höhe des Siliconwalls 52 genau auf die mittelwertig eingestellte Höhe von 16 mm, gemessen vom Symphysenpunkt 13 bis zur Kauebene, während der Stützbolzen 26 des Klapparmes 6 speilfrei auf seinem Lager 27 aufliegt.

Sollte es erforderlich sein, eine Zentrikschreibplatte 2 in den Bißwall zu integrieren, so ist die Zentrikschreibplatte 2 mit zwei Bohrungen auf zwei Führungsstifte 7a, die sich an der Unterkante der Stempelplatte 7 befinden, aufzustecken, mit einem kleinen Tropfen Klebewachse gegen Herabfallen zu sichern und zusammen mit der Stempelplatte 7 auf den noch weichen Siliconwall 52 zu drücken. Dadurch ist sichergestellt, daß sich die Zentrikschreibplatte 2 in horizontaler Lage und in der mutmaßlichen Höhe der Kauebene befindet.

Nach Aushärtung des Seliconwalls 52 wird der Klapparm 6 mit der Stempelpmatte 7 zurückgeklappt. Der Bißwall 52, der bei gegebener Indikation auch die Aussparung zur Fixierung der Zentrikschreibplatte 2 besitzt, wird mit ein paar Tropen Kleber auf den Funktionslöffel 46 aufgeklebt und kann jetzt in die endgültige Form gebracht werden. Beide Funktionslöffel 46, der obere und der untere, sind jetzt zur Funktionsabformung sowie zur Zentrikbestimmung am Patienten vorbereitet.

Zur Justierung und Nivellierung sowie zur Herstellung des Bißwalls des Oberkiefers wird sinngemäß genauso verfahren wie es für den Unterkiefer ausführlich beschrieben wurde, jedoch unter Berücksichtigung des Umstandes, daß für den Oberkiefer die speziellen Einrichtschlüssel (Fig. 18 bzw. 19) bzw. Bißwallstempelplatten (Fig. 13 bzw. 14) verwendet werden.

Die Funktionsabformung wird im Ober- bzw. Unterkiefer getrennt vorgenommen. Die Funktionsabformung ist unabdingbar erforderlich um bei der anschließenden Zentrik- und Bißhöhenbestimmung das optimale Lager zu bieten, das, um das präziseste Ergebnis zu erreichen, den Konturen der künftigen Prothese voll entsprechen muß. Es sollte unter keinen Umständen unterlassen werden, vor der Funktionsabformung beide Löffel 46 auf tadellosen Sitz und Druckstellenfreiheit zu überprüfen.

Anschließend sind die Zentrik- sowie die effektive Bißhöhenbestimmung vorzunehmen.

Nachdem die Funktionsabformung in beiden Kiefern beendet ist, wird zunächst die Zentrikschreibplatte 2 mit ein paar Tropfen Kleber in die Aussparungen im Bißwall des Unterkiefer-Funktionslöffels 46 eingeklebt und der funktionsgerecht abgeformte Unterkieferlöffel 46 in den Mund des Patienten eingesetzt. Der ebenfalls mit einem Bißwall versehene und funktionsgerecht abgeformte Oberkieferlöffel 46 wird ebenfalls in den Mund des Patienten eingesetzt und anschließend der Patient gebeten, seinen Mund zu schließen. Mit der im Oberkieferlöffel 46 befindlichen Stellschraube 48, die so im Oberkieferlöffel 46 befestigt ist, daß deren nach unten weisende, zu einem Schreib- und Fixierstift 48a ausgebildeten Spitze bei geschlossenem Mund des Patienten etwa das Zentrum der im Unterkieferlöffel 46 fixierten Schreibplatte 2 trifft, wird die individuelle Bißhöhe des Patienten im Zustand des habituellen Schlußbisses eingestellt. Sollte dabei die Höhe der Siliconbißwälle 52 stören, so ist mit einem Messer der Wall 52 des Oberkiefers soweit zurückzuschneiden, daß zwischen beiden Wällen eine Spalte von etwa 2 mm verbleibt, während die Stellschraube 48 des Oberkiefers bei effektiv eingestellter Bißhöhe fest auf der Zentrikschreibplatte 2 aufliegt. Damit ist die Bißhöhe registriert. Zur Ermittlung der Bißhöhe stehen dem Zahnarzt verschiedene bekannte Methoden zur Verfügung.

Zur Durchführung der Zentrikbestimmung werden zunächst beide Funktionslöffel 46 aus dem Munde des Patienten entfernt und die Stellschraube 48 im Oberkieferlöffel 46 gegen Verstellen gesichert, z. B. durch eine Kontermutter 53 (vgl. Fig. 17 ).

Das Zentrum der Schreibplatte 2 wird mit einer auffälligen, schnelltrocknenden Farbe bestrichen (z.B. dunkler Nagellack) und anschließend werden beide Löffel 46 wieder eingesetzt. Der Patient schließt nun den Mund und führt extreme Artikulationsbewegungen aus, wobei mehrere Vorschubbewegungen und Seitwärtsbewegungen in beide Richtungen auszuführen sind. Während dieser Bewegungen ritzt die zu einer Spitze 48a ausgeformte Stellschraube 48 des Oberkiefers eine pfeilwinkelförmige Zeichnung in die farbig markierte Fläche der Zentrikschreibplatte 2. Diese Figur stellt den sogenannten "Gothischen Bogen" 54 (vgl. Fig. 11 a)dar. Linien dieser Figur 54 durchkreuzen exakt den Punkt, der die Zentrik 54a der Prothese im Rahmen der Artikumationsgeometrie festlegt.

Der Unterkieferlöffel 46 wird anschließend aus dem Munde es Patienten entfernt, und eine Scheibe 55 mit einer zentramen Bohrung 55a, deren Durchmesser genau dem der Spitze 48a der Stellschraube 48 entspricht, so auf die Zentrikschreibplatte 2 aufgeklebt, daß das Zentrum der Bohrung 55a exakt auf dem markierten Zentrikpunkt 54 auf der Schreibplatte 2 zu liegen kommt.

Anschließend wird der Seitenzahnbereich des Unterkieferlöffels 46 links und rechts mit neu angemischtem Silicon belegt und dem Patienten wieder eingesetzt. Der Patient schließt nun den Mund, wobei der in der Frontzahnpartie vom Silicon ausgesparte Bereich die visuelle Kontrolle über das Einrasten des Schreibstiftes 48a in die Bohrung 55a der aufgeklebten Scheibe 55 zuläßt (Fig.17 ) und das frische Silicon im Molarenbereich die ursprünglich freigeschnittenen Räume zwischen den Bißwällen satt ausfüllt.

Danach wird weiteres frisches Silicon im Frontzahnbereich zwischen die Bißwälle 52 gedrückt und leicht geglättet. Die Aufgabe des Zahnarztes besteht nun noch darin, nach Aushärtung der "Verschlüsselung", die Lippenschlußlinie auf der versäuberten Fläche zu markieren sowie den Kreuzungspunkt der vertikalen Achse 12 durch den Symphysenpunkt 13 auf der Lippenschlußlinie anzuzeichnen.
Abformung sowie Zentrik- und Bißhöhenbestimmung sind damit abgeschlossen.

Nach Beendigung dieses Vorganges liegen Ober- und Unterkieferabdruck verschlüsselt und lagerichtig zueinander angeordnet vor. Das entspricht den effektiven Kieferverhältnissen im Zustand des habituellen Schlußbisses. Die Anordnung zeigt eine eindeutige Markierung der Lippenschlußlinie, welche sich auf der Höhe der tatsächlichen Kauebene befindet. Um diese Anordnung in die geometrisch richtige Position des für die Herstellung der Prothesen erforderlichen Artikulators zu bringen, werden zunächst von den Funktionsabdrücken geeignete Funktionsmodelle hergestellt.

Die Funktionsmodelle sind nach den Kriterien herzustellen, wie sie in der Zahntechnik üblich und bekannt sind. Jedoch ist insbesondere mit Blick auf das Unterkiefermodell 1 betreffs dessen weiterer Verwendung im Einricht- und Nivelliergerät zur Gestaltung der Unterseite des Modells auf die plane Ausführung zu achten. Des weiteren ist das Unterkiefermodell 1 unbedingt so zu gestalten, daß es sich leicht vom Abdruck lösen läßt, ohne diesen zu beschädigen. Ebenso muß sichergestellt sein, daß sich der Siliconabdruck problemlos und spielfrei wieder auf das Modell 1 aufsetzen läßt.

Das inzwischen vom Abdruck getrennte Unterkiefermodell 1, das an seiner Unterseite wieder eine Magnetplatte 25 trägt, ist anschließend durch Justieren mit dem Gerät, unter Verwendung der bei der Bißregistrierung und Zentrikbestimmung gewonnenen individuellen, patientenbezogenen Daten in seine, der Artikulatorgeometrie entsprechenden, richtigen Position zu bringen. Dazu wird in gleicher Weise verfahren, wie bei der Einjustierung des Vorfunktionsmodells. Zuvor jedoch ist der Einstellstift 37, welcher im Einrichtschlüssel 10 den Symphysenpunkt 13 markiert, in der Höhe auf das Maß einzustellen, welches an der verschlüsselten Bißschablonenanordnung vom Symphysenpunkt 13 bis zur Markierung der Lippenschlußlinie gemessen wird. Anschließend wird nivelliert und justiert, wie zuvor bechrieben.

Nunmehr wird der Einrichtschlüssel 10 entfernt und die Bißschablonenanordnung mit dem bis dahin noch nicht vom Abdruck getrennten Oberkiefermodell auf das justierte Unterkiefermodell aufgesetzt. An den Klapparm 6 des Gerätes wird eine zu dem verwendeten Artikulator passende Sockelplatte 8 angesetzt und verschraubt. Auf die Modellanordnung wird eine zum Einsetzen in die Sockelplatte 8 erforderliche Menge plastisch angerührten Gipses gegeben und die Aufklappeinrichtung mit der Sockelplatte 9 nach vorn geklappt, so daß die Sockelplatte 8 in den weichen Gips einsinkt. Der Stützbolzen 26 des Klapparmes 6 muß dazu spielfrei auf seinem Lager 27 ruhen.

Nachdem der Gips genügend angezogen und eine gewisse Festigkeit erreicht hat, wird der Übergang zwischen Sockelplatte 8 und Oberkiefermodell 47 versäubert und die Beendigung des Abbindens des Gipses abgewartet.

Anschließend wird durch Lösen der Verschraubung 89 die Sockelplatte vom Klapparm 6 abgetrennt und der Klapparm 6 nach hinten geklappt.

Die gesamte Abdruck-Modellkombination wird von dem Nivelliertisch 9 des Gerätes abgenommen und an der vorgesehenen Stelle des Oberteils des zur Fertigstellung der Prothesen zu verwendenden Artikulators eingesetzt.

Danach wird der Artikulator auf den Kopf gestellt, so daß das Oberteil des Artikulators auf einer Unterlage zu liegen kommt, und das Unterkiefermodell 1 mit seiner Unterseite nach oben gerichtet ist. Das Unterteil des Artikulators befindet sich in diesem Moment nach hinten geschwenkt und trägt eine Sockelplatte zum Eingipsen des Unterkiefermodells. Dieser Vorgang spielt sich prinzipiell in gleicher Weise ab, wie es oben bereits zum Eingipsen des Oberkiefermodells beschrieben wurde.

Beide Modelle befinden sich nun in absolut lagerichtiger Position innerhalb der Artikulatorgeometrie und stellen in Kombination mit dem Artikulator die Voraussetzung für das Funktionieren der nach diesen Untermagen anzufertigenden Prothesen dar.

Die Verschraubung 28 mit Stiften 29 ermöglicht neben der Befestigung der Stempel- bzw. der Sockelplatte 7,8 auch die Befestigung der verschiedensten Adaptionseinrichtungen zur lagerichtigen Aufnahme von Sockelplatten fast aller bekannter Artikulatormodelle, wodurch das erfindungsgemäße Gerät seine Anwendung in Verbindung mit allen bekannten Artikulatormodellen finden kann.

In Fig. 8 und 9 ist eine weitere Ausführung eines Einrichtschlüssels (57) gezeigt, der eine mittels Schrauben (58) unter einem Adapter (30) festlegbare Tragschiene (59) aufweist, die an einem Längenende in der Führungshülse (38) den Einstellstift (37) mit Einstellpunkte (37a) aufnimmt und im anderen Längenendbereich eine in der Draufsicht V-förmige Lehre (60) verstellbar, und zwar, verschiebbar und um eine senkrechte Achse schwenkbar trägt.

Die V-förmige Lehre (60) zeigt an der Außenkante jedes der beiden V-Schenkel eine messerartig ausgebildete Meßkante (60a). In Längsrichtung der auf der Mittellinie (56) liegenden Tragschiene (59) ist ein Längsschlitz (61) ausgenommen, durch den eine in die Lehre (60) in deren V-Scheitelpunkt eingreifende Schraube (62) als senkrechte Schwenkachse faßt; um die Schraube (61) ist eine sich einenends auf der Tragschiene (59) und anderenends gegen einen Schraubenkopf (62a) abstützende Druckfeder (63) angeordnet, die die Lehre (60) unter Druckspannung klemmend gegen die Tragschiene (59) zieht und hält.

Die Lehre (60) ist im Bereich des Längsschlitzes (61) stufenlos verschiebbar und um die Schraube (62) stufenlos verschwenkbar und somit genau auf die markanten Kieferpunkte (13, 36) einstellbar und wird in der Einstellung durch die Feder (63) automatisch gehalten.

Dieser Einrichtschlüssel (57) wird mittels des Adapters (30) an dem Klapparm (6) und somit indirekt an den Säulen(4) abnehmbar festgelegt, so daß er im Gegensatz zum Einrichtschlüssel (10) von oben nach unten über das Kiefermodell (I, 47) in seine Höhenlage gebracht und vom Klapparm (6) gehalten wird.

Der Einstellstift (31) hat die gleichen Bauteile und Funktionen wie der an dem Einrichtschlüssel (10).

Fig. 13 und 14 zeigen eine an einem Adapter (30) mittels Schrauben (58) befestigte Stempelplatte (64), die eine parabelförmige Grundform hat.

Diese Stempelplatte (64) wird bei Unterkiefermodellen (1) eingesetzt und hat hierbei die Stifte (7a) für die Zentrikplatte (2); bei der Ausführung der Stempelplatte (64) für Oberkiefermodelle (47) ist die Stempelplatte (64) ohne Stifte (7a) ausgeführt und ist an ihren beiden Ecken mit größeren Abschrägungen (65) ausgestattet.

Des weiteren kann die Stempelplatte (64) so ausgebildet sein, daß sie sowohl für Unterkiefermodelle (1) als auch für Oberkiefermodelle (47) verwendet werden kann.

Fig. 18 und 19 zeigen einen Einrichtschlüssel (67) zum Einrichten von Oberkiefermodellen, die im Instrumententräger (66) auf dem Nivelliertisch (9) umgekehrt (mit den Zähnen nach oben) aufliegen.

Dieser Einrichtschlüssel (67) wird mittels eines Adapters (30) an dem Klapparm (6) abnehmbar gehalten und zeigt eine auf der Mittellinie (56) des Nivelliertisches (9) mit ihrer Längsrichtung verlaufende Tragschiene (71), die an ihrem den Säulen (4) zugewandten Längenende eine querverlaufende Richtleiste (72) und an ihrem anderen Längenende einen Einstellstift (37) hält.

Die Richtleiste (72) ist um eine senkrechte, von einer Schraube (73) gebildete Schwenkachse schwenkbar und mit dieser Schraube (73) in einem Längsschlitz (74) stufenlos verschiebbar an der Tragschiene (71) gehalten.

Um die Schraube (73) ist eine sich auf der Tragschiene (71) und am Schraubenkopf (73a) abstützende Druckfeder (73b)angeordnet, die die Richtleiste (72) unter Klemmwirkung gegen die Tragschiene (71) hält und in jeder eingestellten Lage automatisch fixiert.

Die Richtleiste (72) hat an ihrer den Säulen (4) zugewandten Längskante eine durchgehende oder in zwei Abschnitten aufgeteilte Richtkante (72a), die nach unten gerichtet und messerartig ausgebildet ist.

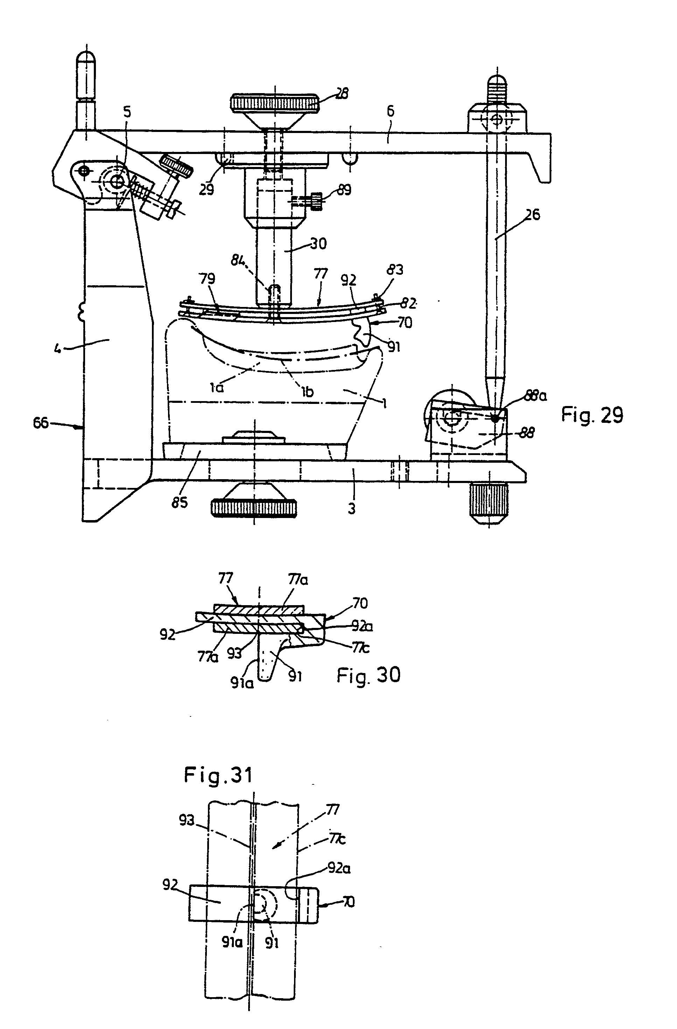

Mit dieser Richtkante (72a) wird die Richtleiste (72) auf die Rachenblasenfalte (75) (Fig. 28) des Oberkiefermodelles (47) eingestellt, wobei diese Richtleiste (72) durch ihre Verschwenkbarkeit und Verschiebbarkeit ein genaues Einstellen auf unterschiedlich große und auch asymmetrische Oberkiefermodelle (47) ermöglicht.

Der Einstellstift (37) zur Erfassung der Umschlagfalte (75a) (Fig. 32 und 32 a) ist vorzugsweise fest (nicht höhenverstellbar) in der Tragschiene (71) gehalten. Er kann als runder Stift oder aber auch in gegabelter Form vorliegen.

Im Stützbolzen (26) ist ein Anzeigestift (76) angeordnet, der in dem Stützbolzen (26) herausnehmbar angebracht ist. Dieser Anzeigestift (76) verläuft genau waagerecht in sagittaler Richtung und befindet sich in der Höhe genau auf Kauebenen-Niveau innerhalb der Artikulationsgeometrie.

Er ist in eine Bohrung (26 a) des Stützbolzens (26) eingesteckt und darin klemmend verschiebbar gehalten. Das in sagittaler Richtung weisende Ende (76 a) des Anzeigestiftes (76) ist schlank und spitz und markiert den Inzisalpunkt zwischen den beiden mittleren Frontzähnen einer Unterkiefer-Prothese. Am anderen Ende hat der Anzeigestift (76) einen Griffknopf (76 b).

Die Aufstellhilfe (68) nach Fig. 20 bis 28 für das lagerichtige Aufstellen der Zähne 1. bis 7. (mit 8 ist der Weisheitszahn bezeichnet) bei Unterkiefer-Totalprothesen ist von einer dreiteiligen Kalotte (77, 79) gebildet, die einen kalottenartig gewölbten, gegenüber einem Unterkiefermodell (1) lagefixierbaren Halter (77) mit sagittaler und transversaler Kompensationskurve (78a, 78b) und zwei innerhalb der Kalotte (Kalottenwölbung/Kalottenebene) schwenkbare und verschiebbare sowie arretierbare Einsätze (79) zur Einstellung auf die Zentralfissuren -Linien (80) aufweist.

Der Halter (77) ist von einem in Längs- und Querrichtung kalottenförmig gewölbten Steg gebildet, der zwei durch einen Abstandshalter (81) mit Abstand übereinandergehaltene, an beiden Längenenden durch je eine Senkkopfschraube (82) mit Rändelmutter (83) zusammengehaltene und zwischen sich einen sich über die gesamte Stegbreite und bis auf den Abstandshalter (81) über die gesamte Steglänge erstreckenden Einsteckschlitz (77b) bildende Stegplatten (77a) besitzt.

Der Abstandshalter (81) ist von einer Platte gebildet, die sich im mittleren Längenbereich des Halters (77) erstreckt; eine Senkkopfschraube (84) faßt von unten her durch die beiden Stegplatten (77a) und den Abstandshalter (81) hindurch und mit dieser Senkkopfschraube (84) wird die Aufstellhilfe an einem Adapter (30) befestigt und mit dem Adapter (30) in dem Instrumentenhalter (66), gemäß Fig. 20, festgelegt.

Die beiden Senkkopfschrauben (82) fassen ebenfalls von unten her durch die Stegplatten (77a) hindurch und alle drei Senkkopfschrauben (82, 16) liegen bündig zu der unteren, wirksamen Kalottenwölbung, so daß sie nicht stören.

Jeder der beiden Einsätze (79) setzt sich aus einem Lineal (79a) und mindestens einem, vorzugsweise zwei, an jeweils einem Lineal-Längenende im definierten Winkel an einer gemeinsamen Linealseite abgehenden Steckarmen (79b) zusammen, wobei das Lineal (79a) und die Steckarme (79b) von Plattenteilen gebildet und entsprechend der Kalotte in sagitaler und transversaler Richtung gewölbt sind. Die Steckarme (79b) lassen sich durch Kleben, mittels Nieten, Schrauben od. dgl. an dem Lineal (79a) auf dessen Oberseite befestigen oder mit dem Lineal (79a) einstückig ausbilden. Jeder Einsatz (79) faßt mit seinen Steckarmen (79b) in den Einsteckschlitz (77b) des Halters (77) von einer Seite ein, wobei beim Einstellen auf die ZentralfissurenLinie (80) ein oder beide Einsätze (79) im Halter (77) eingesteckt sind. Bei Verwendung nur eines Einsatzes (79) wird nach der Einstellung auf die Zentralfissuren-Linie (80) und Aufstellung der Zähne 3. bis 7. dieser Einsatz (79) entfernt und dann der zweite Einsatz (79) eingesetzt und der gleiche Vorgang erfolgt auf der gegenüberliegenden Seite.

Der Einsteckschlitz (77b) und die Steckarme (79b) sind so aufeinander abgestimmt, daß eine Klemmwirkung in der eingesteckten Stellung entsteht, die durch die Schrauben (82) nach verstärkt oder unterstützt werden kann, wobei durch die Verwendung von Rändelnuttern (83) ein Überdrehen der Schraubwirkung verhindert und der Einsatz eines WErkzeuges ausgeschlossen wird.

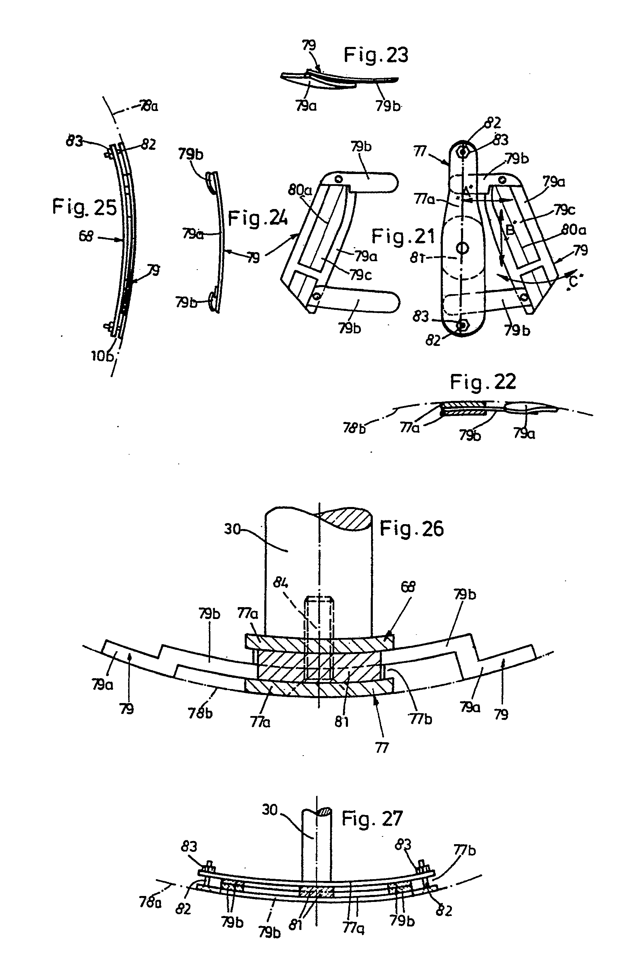

Es ist bevorzugt, das Lineal (79a) aus einem durchsichtigen Kunststoff zu fertigen und dabei auf der Unterseite des Lineals (79a) eine geradlinige Linienmarkierung (80a), wie Farblinie, Rille, Erhöhung od dgl., vorzusehen, mit der das Lineal (79a) auf die Zentralfissuren-Linie(80) genau eingerichtet werden kann. Auch kann das Lineal (79a) nur teilweise durchsichtig sein, wie in Fig. 21 dargestellt. Hierbei hat das Lineal (79a) ein Fenster, in das ein duchsichtiges Teil (79c) eingesetzt ist, das die Linienmarkierung (80a) besitzt.

Weiterhin kann das Lineal (79a) auch aus undurchsichtigem Material bestehen - hierbei bildet dann die innere Lineal-Längskante die gemäß der Zentralfissuren-Linie (80) einrichtbare Zahnführungskante.

Der mit seinen Steckarmen (79b) in den Einsteckschlitz (77b) eingesteckte Einsatz (79) ist in Seitenrichtung "A" und in Längsrichtung "B" stufenlos verschiebbar und in Pfeilrichtung "C" stufenlos verschwenkbar (Fig. 21), so daß eine individuelle Einstellung des Einsatzes (79) möglich ist. In jeder eingestellten Stellung befindet sich der Einsatz (79) dabei imer innerhalb der Kaolottenebene, d.h., der Einsatz (79) wird immer nur innerhalb der Kalottenwölbung bewegt.

Der Halter (77) und die beiden Einsätze (79) lassen sich aus Metall, wie Leichtmetall, undurchsichtig oder mit durchsichtigem Bereich für die Markierung (80a) oder aus durchsichtigem Kunststoff bilden.

Das Lineal (79a) und die daran angebrachten oder mit dem Lineal (79a) einteilig ausgebildeten Steckarme (79b) haben vorzugsweise eine rechteckige Grundform, sie können aber auch andere, geeignete Grundforme, haben.

In Fig. 20, 22 und 25 ist der Halter (77) für die Aufnahme immer nur eines Einsatzes (79) ausgeführt und demzufolge hat der Abstandshalter (81) eine Höhe, die der Stärke der Steckarme (79b) entspricht und dementsprechend ist auch die Schlitzhöhe bestimmt. Bei dieser Ausführung wird erst ein Einsatz (79) eingesteckt und auf die Zentralfissuren-Linie (80) eingerichtet und nach dem Aufstellen der Zähne 3. bis 7. der Einsatz (79) herausgenommen und dann kann der zweite Einsatz (79) eingesetzt und für die gegenüberliegende Zahnreihe 3. bis 7. benutzt werden.

Fig. 26 und 27 zeigte eine Ausführung für den gleichzeitigen Einsatz beider Einsätze (79). Hierbei ist der Abstandshalter (81) in der Höhe der doppelten Stärke der Steckarme (79b) als ein Plattenteil oder zwei aufeinanderliegende Plattenteile ausgeführt, so daß der SChlitz (77b) das Einstecken beider Einsätze (7) ermöglicht, die dann mit ihren Steckarmen (79b) aufeinanderliegen.

Es ist bevorzugt, den Abstandshalter (81) von zwei gleich dicken, den Steckarmstärken entsprechenden Plattenteilen zu bilden, wodurch je nach Wunsch der Halter (77) durch Einsatz eines oder beider der Abstandshalter-Plattenteile für eine wechselweise einseitige oder gleichzeitig beidseitige Einsteckung der Einsätze (79) verwendet werden kann.

Auf der Grundplatte (17) des Instrumententrägers (66) (Artikulators) wird das Unterkiefermodell (1) auf einer Sockelplatte (85), auf den Symphysenpunkt (13) und die Trigona (36) eingerichtet, aufgenommen.

Der Stützbolzen (26) ist höheneinstellbar im Klapparm (6) gelagert und stützt sich auf einem um eine waagerechte Achse (88a) schwenkbaren Einstelltisch (88) der Grundplatte (3) ab, wobei die Längsachse des Stützbolzens (26) mit der Schwenkachse (88a) fluchtet.

Die Kauebene (87) der Kalotte (77, 79) wird dadurch fixiert, daß der Adapter (30) in sich eine feste Einheit bildet und in seiner Höhe in bezug auf den verwendeten Artikulator definiert ist, so daß beim Herunterklappen des Klapparmes (6) mit Adapter (30) und Kalotte (77, 79) immer die richtige Kauebene (87) vorliegt.

Die Höhe der Kauebene (87) läßt sich aber auch durch einen in sich höhenverstellbaren Adapter (30) einstellen. Hierbei ist der Adapter (30) in sich teleskopartig verschiebbar ausgeführt und wird durch eine Feststellschraube (89) in der eingestellten Höhe fixiert (Fig. 20).

Um den senkrechten Stützbolzen (26) ist ein Anzeigestift (76) mit Spitze (76a) verdrehsicher, höhenverschiebbar und fixierbar gelagert. Der Stützbolzen (26) weist auf Höhe der fiktiven Kauebene (87) eine Markierung auf, auf die der Anzeigestift (76) eingestellt wird und dann liegt dessen Spitze (76a) auf der fiktiven Kauebene (87) und somit auf dem Incisalpunkt.

Für die Einstellung des Adapters (30) auf die Kauebene (87) wird der Klapparm (6) heruntergeschwenkt und der Halter (77) fällt auf die Spitze (76a) und hat dadurch die richtige Höhenlager; nun kann der Adapter (30) durch die Feststellschraube (89) fixiert werden und die Kalotte (77, 79) befindet sich exakt auf der Bißhöhe.

Die Längsachse (69) des Halters (77) verläuft auf der Längsachse (56) des Instrumententrägers (66), damit auch nach Entfernen des Einstellstiftes (76) die Mittelachse des Kiefers erkennbar bleibt, indem man sich an der am Halter (77) angebrachten Mittellinie (6) orientieren kann.

Die Fig. 28 zeigt eine schematische Draufsicht auf einen Unterkiefer mit einer Zahnreihe an Zähnen 1. bis 8.. Die Zentralfissuren-Linien(80) verlaufen dabei zwischen den Eckzahnpunkten (90) und den Trigona (36).

Der Funktionsablauf für das Aufstellen der Zähne bei Unterkiefer-Totalprothesen mittels der Aufstellhilfe (68) und in Verbindung mit dem Artikulator ist folgender:

1. Das Unterkiefermodell (1) wird im Artikulator mittels der Sockelplatte (85) auf die wesentlichen Punkte, nämlich Symphysenpunkt (13), Trigona (36) und Kauebene (87) eingerichtet, eingesetzt (Fig. 20, 21),

2. der Klapparm (6) mit der daran durch den Adapter (30) gehaltenen Aufstellhilfe (68) wird in die in Fig. 20 dargestellte Gebrauchsstellung heruntergeschwenkt und dabei wird die Aufstellhilfe (68) durch den Stützbolzen (26) und den in sich starren Adapter (30) oder durch den Einstellstift (76) und höhenverstellbaren und fixierbaren Adapter (30) in der richtigen Höhe gehalten und es wird die Höhe der aufzustellenden Zähne 3. bis 7. mit bezug auf die Kauebene (87) definiert festgelegt (Fig. 26),

3. auf dem Modell (1) sind die Trigona (36) zu markieren. Damit ist die Linie (80 a) an ihrem distalen Punkt fixiert. Der Eckzahnpunkt (90) ergibt sich aus der STellung des Eckzahnes nachdem die Frontzahnreihe (1 bis 3 links und 1 bis 3 rechts) den anatomischen Gegebenheiten entsprechend aufgestellt wurde. Das Zentrum des Trigonums am Unterkiefer-Modell sowie der Mittelpunkt des Höckers des Eckzahnes sind mit der Markierungslinie (80 a) des Kalottenflügels in Deckung zu bringen, was durch Verschieben und Verschwenken des Einsatzes (79) oder beider Einsätze (79) erfolgt,

4. die Arretierung des bzw. der eingestellten Einsätze (79) wird durch die Klemmung des Einsteckarmes (79b) im Einsteckschlitz (77 b) selbsttätig bzw. durch die Rändelmuttern (83) vorgenommen,

5. nunmehr können die Zähne 4. bis 7. aufgestellt werden,

6. zuerst wird eine Zahnreihe 4. bis 7. anhand eines Einsatzes (79) aufgestellt und dann erfolgt das Auswechseln des Einsatzes (79) durch den zweiten Einsatz (79) und der gleiche Vorgang läuft auf der gegenüberliegenden Seite ab. Sind am Halter (77) beide Einsätze (79) festgelegt, können auch beide Zahnreihen in einem Vorgang aufgestellt werden.

Die Zähne 1.bis 7. stehen in der sagittalen und auch transversalen Kompensationskurve (78a, 78b), deren Kurvenform auch die Kalotte (77, 79) hat, welche auf der Höhe des 3. sowie im Übergangsbereich zwischen 6. und 7. Zahn die fiktive Kauebene (87) kreuzt.

Dadurch, daß die Linie (80a) an der Unterseite der durchsichtigen Einsätze (79) - Lineale (79a) - angebracht ist, wird die Wirkung der Lichtbrechung umgangen und dadurch ein optimal genaues Einstellen von obern her ermöglicht.

Das Aufstellen der Unterkieferzähne 3. bis 7. erfolgt entsprechend der eingestellten Zentralfissuren-Linie (80) und erfüllt damit wichtige Grundvoraussetzungen zur Funktion der anzufertigenden Prothese.

Beim gleichzeitigen Einstecken zweier Einsätze (79) in den Halter (77) ist gemäß Fig. 26 bei einem Einsatz (79) zwischen dem Lineal (79a) und dem Steckarm (79b) ein Abstandshalter (79a) vorgesehen, so daß die Steckarme (79b) beider Einsätze (79) übereinander liegen und die beiden Lineale (79a) in derselben Kalottenwölbung (78) sich erstrecken.

Zum lagerichtigen Aufstellen des rechten oder linken unteren Zahnes 1. ist gemäß Fig. 29 bis 31 eine aus einem Pseudozahn (91) mit Steckarm (92) gebildete Zahnschablone (70) vorgesehen, welche mit ihrem Steckarm (92) lösbar und mit der mesialen Kante (91a) des Pseudozahnes (91) auf eine am Halter (77) der Aufstellhilfe (68) vorgesehene Mittellinie (93) und entlang dieser Mittellinie (93) in sagittaler Richtung einrichtbar gehalten ist.

Diese Zahnschablone (70) ermöglicht das lagerichtige Aufstellen des 1. rechten bzw. linken Zahnes, wenn auf dem Kieferkamm (1a) eine Wachsschicht (1b), die den Kieferkamm (1a) im Rahmen der gewonnenen Grenzen des Abdruckes formenmäßig und flächig überdeckt, aufgelegt ist und dadurch der Kieferkamm (1a) von dieser Wachsschicht (1b) überdeckt wird und nicht einsehbar ist.

Die mesiale Kante (91a) des Pseudozahnes (91) bildet dann eine Anstellfläche für den rechten bzw. linken Zahn 1.. Die mesiale Kente (91a) steht senkrecht. Die die Prothesensymmetrieachse bildende Mittellinie (93) ist von einer in der unteren Stegplatte (77a) vorgesehenen, nutförmigen Einfräsung gebildet, die sich in Längsrichtung und somit in sagittaler Richtung des Halters (77) erstreckt.

Der Steckarm (92) steht winklig, vorzugsweise rechtwinklig, zur mesialen Kente (91a) und ist als flacher Steg ausgebildet, der zwischen die beiden Stegplatten (77a) des Halters (77) faßt und durch die Schraube (82) mit Rändelmutter (83) im Halter (77) in seiner eingestellten Lage arretiert wird.

Dieser Steckarm (92) bildet eine Anschlagkante (92a), welche mit einer Längskante (77c) des Halters (77), insbesondere der unteren Stegplatte (77a), zusammenwirkt; durch diese Anschlagkanten (92a, 77c) wird die Einstecktiefe der Zahnschablone (70) quer zur Halterlängsrichtung begrenzt und gleichzeitig sichergestellt, daß die mesiale Kante (91a) dann immer auf der Mittellinie (93) liegt. Entsprechend der unterschiedlichen Prothesen läßt sich dann die Zahnschablone (70) in sagittaler Richtung (in Längsrichtung des Halters (77)) stufenlos verschieben, wobei dann inner die mesiale Kante (91a) auf der Mittellinie (93) verbleibt.

Der Pseudozahn (91) mit dem Steckarm (92) ist in bevorzugter Weise einteilig aus Kunststoff oder Metall geformt; er kann auch aus einer nicht einem Zahn entsprechenden Form, wie Steg, Nocken od. dgl., gebildet sein.

Diese Zahnschablone (70) wird für den Rechts- und Links- einsatz eingesetzt und hat dabei, je nach Links- oder Rectseinsatz, einen nach links oder rechts zeigenden Steckarm (92), so daß für das Aufstellen der 1. Zähne zwei Zahnschablonen (70) vorhanden sind.

Zum Einstellen wird zuerst die Zahnschablone (70) mit ihrem Steckarm (92) zwischen die Stegplatten (77a) des Halters (77) gesteckt und dann auf der Mittellinie (93) in die Stellung geschoben, in der sich die lagerichtige Position entsprechend den anatomischen Gegebenheiten des Kiefers befindet.

Dann wird die Zahnschablone (70) durch die Rändelmutter (83) arretiert. Anschließend wird der Halter (77) mit Zahnschablone (70) durch den Klapparm (6) hochgeschwenkt.

Nunmehr wird auf den Kieferkamm (1a) die Wachsschicht (-schablone) (1b), die die Wachsbasis zur Aufstellung der totalen unteren Prothese darstellt, aufgelegt und dann der Klapparm (6) wieder heruntergeschwenkt, so daß der Pseudozahn (91) in die Wachsschicht (1b) eindringt. Dazu ist es zweckmäßig, die Stelle, wo der Zahn in die Wachssicht eindringt, mit einem heißen Wachsmesser weich zu machen. Nunmehr kann zuerst die rechte oder linke und dann die linke oder rechte Zahnreihe 1. bis 3. in der Wachsschicht (1b) aufgestellt werden.

Dann wird der Klapparm (6) wieder hochgeschwenkt und die Zahnschablone (70) vom Halter (77) abgenommen und nunmehr in den Halter (77) die linealförmigen Einsätze (79) eingesetzt und auf die Zentralfissurenlinie eingerichtet so daß dann die anderen Zähne 4. bis 7. aufgestellt werden können.

Sinn und Zweck der Zahnschablone (70) ist es, einerseits das Aufstellen der Zähne 1. bis 3. genau durchführen zu können und andererseits die Einrichtung der Einsätze (79) auf die Zentrafissurenlinie zu erleichtern, da die Markierungslinien der Einsätze (79) sich mit der Zentralfissurenlinie decken, welche ihrerseits die Höckerschneide des Eckzahnes 3. in mesialer Richtung sowie des Zentrums des Trigonum-Retromolare in distaler Richtung schneidet.

Die vordere Kante des Pseudozahnes (91) entspricht in ihrer form dem seitlichen Profil der Frontfläche eines unteren Frontzahnes 1. und ist in der nittelwertig richtigen Achsenneigung eines lagerichtig aufgestellten Frontzahnes 1. angeordnet.

## Patentansprüche

1. Gerät zur Anfertigung von Ober- und Unterkiefer-Totalprothesen, bestehend aus

a) einem aus einer Grundplatte (3), zwei darauf sich abstützenden aufrechten Säulen (4) und einem an den Säulen (4) um eine waagerechte Achse (5) schwenkbaren Klapparm (6) gebildeten Instrumententräger (66),

b) einem auf der Grundplatte (3) des Instrumententrägers (66) angeordneten, in der Neigung und in senkrechter Richtung stufenlos einstellbaren Nivelliertisch (9) zur Aufnahme eines Kiefermodelles (1, 47),

c) einem direkt bzw. indirekt an den Säulen (4) des Instrumententrägers (66) oberhalb des Nivelliertisches (9) abnehmbar festlegbaren Unterkiefermodell-Einrichtschlüssel (10 bzw. 57) mit höhenverstellbarem Einstellstift (37) zur Erfassung des Symphysenpunkts (13) und einer in waagerechter Ebene einstellbaren und verschwenkbaren Lehre (41) zur Erfassung der Trigona (36),

d) einer mittels eines Adapters (30) an dem Klapparm (6) des Instrumententrägers (66) abnehmbar festlegbaren Stempelplatte (7 bzw. 64) zur Höhenbegrenzung der Unter- bzw. Oberkiefer-Bißwälle (52),

e) einem mittels des Adapters (30) an dem Klapparm (6) des Instrumententrägers (66) abnehmbar festlegbaren Oberkiefermodell- Einrichtschlüssel (67) mit einer Richtkante (72 a), welche auf die beiden Rachenbläserfalten (75) einstellbar ist,

f) einer mittels des Adapters (30) an dem Klapparm (6) des Instrumententrägers (66) lösbar festlegbaren Aufstellhilfe (68) für das lagerichtige Aufstellen der Zähne bei Unterkiefer-Totalprothesen, welche einen kalottenartig gewölbten, gegenüber dem Unterkiefermodell (1) lagefixierbaren Halter (77) mit sagittaler und transversaler Kompensationskurve (78 a und 78 b) aufweist,

– in dem zwei innerhalb der Kalotte schwenkbare und verschiebbare sowie arretierbare Einsätze (79) zur Einstellung der Zentralfissuren-Führungslinie (80) einsetzbar sind und

– in den eine aus einem Pseudozahn (91) mit Steckarm (92) gebildete Zahnschablone (70) einsetzbar ist, die mit der mesialen Kante (91a) des Pseudozahnes (91) auf eine am Halter (77) vorgesehene Mittellinie (93) und in sagittaler Richtung einrichtbar gehalten und arretierbar ist.

2. Gerät nach Anspruch 1, dadurch gekennzeichnet, daß der Nivelliertisch (9) eine dreieckige Grundform besitzt, mit einer Dreiecksspitze durch die beiden mit Abstand nebeneinander im letzten Drittel der Grundplatte (3) angeordneten Säulen (4) faßt und in allen drei Ecken durch senkrechte, auf der Grundplatte (3) befestigte Nivellierspindeln (11) neigungs- und höheneinstellbar abgestützt ist,

daß der Nivelliertisch (9) in seinen drei Ecken jeweils eine im Durchmesser größer als der Durchmesser der Nivellierspindeln (11) ausgeführte Bohrung (18) hat, mit diesen Bohrungen (18) mit Spiel um die von Gewindebolzen gebildeten Nivellierspindeln (11) faßt und um jede Bohrung (18) ein oberes und unteres Kalottenlager (19) aufweist, in das jeweils eine obere und untere, auf die Nivellierspindel (11) angeschraubte Rändelmutter (20) mit einem Kalottenansatz (21) eingreift,

daß die in der hinteren Dreiecksspitze des Nivelliertisches (9) stehende Nivellierspindel (11) länger als die beiden vorderen Nivellierspindeln (11) ausgebildet ist und um diese längere Nivellierspindel (11) eine auf einen kalottenansatz (21) einwirkende Druckfeder (22) angeordnet ist, die an einer auf das obere Ende der Nivellierspindel (11) aufgeschraubte Hutmutter (23) ihr Widerlager hat, wobei diese Hutmutter (23) gleichzeitig eine Abstützung für den nach oben und hinten geschwenkten klapparm (6) bildet (Fig. 1 bis 6 und 10).

3. Gerät nach Anspruch 2, dadurch gekennzeichnet, daß der Nivelliertisch (9) mit einem in seiner Dreiecksspitze ausgespartem Schlitz (18a) an die Nivellierspindel (11) faßt und mit dieser Dreiecksspitze zwischen der unteren Rändelmutter (20) und dem oberen, unter Federspannung stehenden kalottenansatz (19) gehalten ist und in der hinteren Dreiecksspitze des Nivelliertisches (9) der die Nivellierspindel (11) umfassende Schlitz (18a) mit schwalbenschwanzförmigem Querschnitt ausgespart ist, in den von unten ein dem Nivelliertisch (9) eine zentrische Auflage gebendes kalottenlager (21) eingreift (Fig. 3a).

4. Gerät nach den Ansprüchen 1 bis 3, dadurch gekennzeichnet, daß der Nivelliertisch (9) durch eine zwischen den beiden vorderen Nivellierspindeln (11) auf der Vertikalachse (12) des Symphysenpunktes (13) angeordnete Teleskopführung (14) kardanisch in den Nivellierspindeln (11) und gegenüber der Grundplatte (3) gelagert ist, wobei die Teleskopführung (14) eine auf der Grundplatte (3) befestigte Führungshülse (15) aufweist, in die ein mit einem Kugelkopf (17) in dem Nivelliertisch (9) kardanisch aufgehängt gehaltener senkrechter Führungsstift (16) höhenverschiebbar eingreift, wobei der kugelkopf (17) mit sehr geringem Abstand unter der Oberseite des Nivelliertisches (9) in demselben gelagert ist (Fig. 10).

5. Gerät nach Anspruch 1, dadurch gekennzeichnet, daß der Klapparm (6) mit einem Längenende in der waagerechten Achse (5) zwischen den senkrechten Säulen (4) schwenkbar gelagert ist und an seinem anderen Längenende einen senkrecht zum klapparm (6) stehenden, in der heruntergeschwenkten Anwendungsstellung des klapparmes (6) sich auf der Grundplatte (3) oder einem grundplattenseitigen Stützlager (27) abstützenden und den klapparm (6) in einer höhenmäßig festgelegten waagerechten Lage haltenden Stützbolzen (26) aufweist, und daß in dem klapparm (6) eine Rändelschraube (28) und an der klapparmunterseite zwei Fixierstifte (29) vorgesehen sind für eine lagerichtige lösbare Befestigung der Sockelplatte (8)bzw. der Stempelplatte (7, 64) mit Adapter (30) (Fig. 2, 11, 12 und 15).

6. Gerät nach Anspruch 1, dadurch gekennzeichnet, daß der Einrichtschlüssel (10) einenends in schlitzförmigen Einsteckführungen (34) der beiden Säulen (4) und anderenends durch einen sich auf der Grundplatte (3) abstützenden Stützbolzen (33) in waagerechter Ebene liegend oberhalb des Nivelliertisches (9) gehalten ist, wobei im Bereich einer Einsteckführung (34) eine klemmschraube (35) zur Einrichtschlüsselbefestigung vorgesehen ist. (Fig. 1, 3 bis 6).

7. Gerät nach Anspruch 6, dadurch gekennzeichnet, daß der Einrichtschlüssel (10) eine in Klapparmlängsrichtung verlaufende Einstellschiene (31) aufweist, die an einem Längenende eine querverlaufende und in die Einsteckführungen eingreifende Befestigungsleiste (32) und am anderen Ende den senkrechten Stützbolzen (33) hat.

8. Gerät nach den Ansprüchen 1, 6 und 7, dadurch gekennzeichnet, daß der Einstellstift (37) in einer auf der Einstellschiene (31) befestigten aufrechten Führungshülse (38) höhenverschiebbar und mittels einer klemmschraube (40) festlegbar ist und eine Millimeterskala (39) aufweist, wobei der Einstellstift (37) mit seinem Einstellpunkt (37a) auf der Vertikalachse (12) des Symphysenpunktes (13) angeordnet und der Einstellpunkt (37a) von einem geraden oder gebogenen Stift oder einer Gabel gebildet ist (Fig. 3, 5 bis 7).

9. Gerät nach den Ansprüchen 1, 6 bis 8, dadurch gekennzeichnet, daß die Lehre (41) des Einrichtschlüssels (10) eine trapezförmige Grundform hat, deren beide seitlichen Trapezkanten messerartig ausgebildet und in Richtung auf die Säulen (4) zu aufeinanderzulaufende Meßkanten (42) zur Erfassung der Trigona (36) bilden, daß die trapezförmige Lehre (41) des Einrichtschlüssels (10) in Längsrichtung der Einstellschiene (31) geführt verschiebbar vorgesehen und durch eine in einem Schlitz (44) der Einstellschiene (31) eingreifende Rändelschraube (43) stufenlos in der eingestellten Lage festlegbar ist, und daß die Lehre (41) mit einem ausgefrästen, in der Breite größer als die Breite der Einstellschiene (31) ausgeführten Schlitz (41a) auf der Einstellschiene (31) verschiebbar und in waagerechter Ebene in einem Winkelbereich, vorzugsweise von + - 5°, drehbar gelagert ist (Fig. 7, 7a).

10. Gerät nach Anspruch 1, dadurch gekennzeichnet, daß der Einrichtschlüssel (57) eine am Adapter (30) lösbar festlegbare, auf der Längsachse (56) des Nivelliertisches (9) und der Grundplatte (3) verlaufende Tragschiene (59) aufweist, in deren einem Längenendbereich eine in der Grundform V-förmige, an den Außenkanten beider V-Schenkel je eine messerartige Meßkante (60a) aufweisende Lehre (60) in einen Längsschlitz (61) mittels einer federbelasteten Schwenkachse (62) stufenlos verschiebbar und um die Schwenkachse (62) in waagerechter Ebene schwenkbar und in der eingestellten Lage selbsttätig arretierbar ist und am anderen Längenende ein höheneinstellbarer Einstellstift (37) mit Einstellpunkt (37a) lagert (Fig. 8 und 9).

11. Gerät nach Anspruch 1, dadurch gekennzeichnet, daß der Einrichtschlüssel (67) eine auf der Längsachse (56) des Nivelliertisches (9) und der Grundplatte (3) verlaufende Tragschiene (71) hat, an deren einem Längenende eine um eine federbelastete Schwenkachse (73) in waagerechter Ebene schwenkbare und mit der Schwenkachse (73) in einen Längsschlitz (74) der Tragschiene (71) stufenlos verschiebbare und in der eingestellten Lage selbsttätig arretierbare Richtleiste (72) mit nach unten abgewinkelter, messerartig ausgebildeter Richtkante (72a) gehalten ist (Fig. 18 und 19).

12. Gerät nach Anspruch 11, dadurch gekennzeichnet, daß am anderen Längenende der Tragschiene (71) ein Einstellstift (37) mit Einstellpunkt (37a) befestigt ist, dem ein in einen Stützholm (26) des klapparmes (6) lösbar eingesteckter Anzeigestift (76) für die kauebenhöhe zugeordnet ist (Fig. 18).

13. Gerät nach Anspruch 1, dadurch gekennzeichnet, daß die Stempelplatte (7, 64) eine parabelförmige Grundform hat und für Unter- und/oder Oberkiefermodelle (1, 47) ausgeführt ist sowie als Bißschablone mit Fixierstiften (7a) zur lagesicheren Entnahme einer Zentrikschreibplatte (2) ausgestattet ist (Fig. 11, 13 und 14).

14. Gerät nach Anspruch 1, dadurch gekennzeichnet, daß die Aufstellhilfe (68) eine dreigeteilte kalotte bildet, bei der am Halter (77) für die rechte und die linke Zentralfissuren-Linie (80 Wechselweise oder gleichzeitig je ein innerhalb der kalottenwölbung verschwenkbarer, verschiebbarer und arretierbarer Einsatz (79) lösbar eingesetzt ist (Fig. 20 bis 27).

15. Gerät nach Anspruch 14, dadurch gekennzeichnet, daß der Halter (77) von einem Steg aus zwei im Abstand übereinander angeordneten, miteinander verbundenen und zwischen sich einen Einsteckschlitz (77b) für die Einsätze (79) bildenden Stegplatten (77a) gebildet ist, wobei die beiden Stegplatten (77a) im mittleren Längenbereich des Halters (77) einen den Einsteckschlitz (77b) bildenden Abstandshalter (81) in Plattenform aufweisen, der in der Höhe der Stärke eines Steckarmes (79b) für das wechselweise Einstecken eines Einsatzes (79) oder zweier Steckarme (79b) für das gleichzeitige Einstecken zweier Einsätze (79) entspricht (Fig. 25, 26 und 27).

16. Gerät nach den Ansprüchen 14 und 15, dadurch gekennzeichnet, daß der Halter (77) in seinen beiden Längenenden jeweils eine die beiden Stegplatten (77a) zusammenhaltende und auf die Steckarme (79b) eine Klemmwirkung ausübende Senkkopfschraube (82) mit Rändelmutter (83) hat, wobei die Senkkopfschrauben (82) mit der kalottenunterseite bündig verlaufen und der Halter (77) durch eine mit der kalottenunterseite bündig verlaufende Senkkopfschraube (84) unter einem Adapter (30) befestigt und mit diesem in einem Instrumententräger (66) fixierbar ist.

17. Gerät nach den Ansprüchen 14 bis 16, dadurch gekennzeichnet, daß jeder Einsatz (79) von einem auf die Zentralfissuren-Linie (80) einrichtbaren Lineal (79a) mit zwei an beiden Lineal-Längenenden winklig abgehenden und in den Einsteckschlitz (77b) klemmend eingesetzten, innerhalb des Einsteckschlitzes (77b) stufenlos verschieb- und verschwenkbaren Steckarmen (79b) gebildet ist und dabei mindestens das Lineal (79a) jedes Einsatzes (79) mindestens einen durchsichtigen Materialbereich, wie durchsichtigen kunststoffstreifen, aufweist, vorzugsweise aus durchsichtigem kunststoff besteht, und auf der Unterseite des durchsichtigen Lineals (79a) bzw. Linealbereiches eine mit der Poundschen Linie (80) in Deckung zu bringende Markierungslinie (80a), wie Farblinie, Rille, Erhöhung (Rippe) od. dgl., vorgesehen ist, die sich in Längsrichtung des Lineals (79a) erstreckt, sowie der Halter (77) eine auf seiner Längsachse verlaufende Linienmarkierung (69) in Form einer Farblinie, Rille, erhöhten kante od. dgl., hat (Fig. 21).

18. Gerät nach Anspruch 1, dadurch gekennzeichnet, daß die mesiale Kante (91a) eine Anstellfläche für den rechten bzw. linken Zahn 1. bildet und die Zahnschablone (70) für den Rechts- und Linkseinsatz an je einem Pseudozahn (91) einen rechten bzw. linken Steckarm (92) aufweist (Fig. 29 bis 31).

19. Gerät nach Anspruch 18, dadurch gekennzeichnet, daß die auf der Prothesen-Symmetrieachse liegende Mittellinie (93) von einer nutförmigen Einfräsung in der unteren Stegplatte (77a) des Halters (77) gebildet ist und dabei der Steckarm (92) der Zahnschablone (70) eine mit einer Längskante (77c) des Halters (77) zusammenwirkende, die Einstecktiefe begrenzende und die mesiale kante (91a) in jeder in sagittaler Richtung eingerichteten Stellung auf der Mittellinie (93) haltende Anschlagkante (92a) bildet.

20. Gerät nach den Ansprüchen 18 und 19, dadurch gekennzeichnet, daß der Steckarm (92) winklig, vorzugsweise rechtwinklig zur mesialen kante (91a) verläuft und mit dem Pseudozahn (91) einteilig aus kunststoff, Metall od. dgl. besteht.

## Claims

1. Apparatus for the production of full upper and lower jaw dental prostheses, comprising

a) An instrument holder (66) formed of a base plate (3), two self-standing vertical columns (4) and a folding arm (6) on the columns (4) which rotates around a horizontal axis (5),

b) A levelling table (9), infinitely adjustable in its angle and in a vertical direction, accommodated on the base plate (3) of the instrument holder (66), to hold a model of a jaw (1, 47),

c) A detachable adjusting key (10 and/or 57) for the model of the lower jaw, either directly or indirectly locking on to the columns (4) of the instrument holder (66) above the levelling table, with a setting rod (37) to determine the symphysis (13) and a gauge (41) which can be adjusted and rotated in a horizontal plane, to determine the trigonum (36),

d) A detachable stamping plate (7 and/or 64) which can be fixed to the folding arm (6) of the instrument holder (66) by means of an adapter (30) to limit the height of the walls (52) of the upper and/or lower jaw.

e) A detachable adjusting key (67) for the model of the upper jaw which can be fixed to the folding arm (6) of the instrument holder (66) by means of an adapter (30), with a guiding edge (72a) which can be adjusted at the jaw folds on both sides,

f) An auxiliary device (68) which can be fixed to the folding arm (6) of the instrument holder (66) by means of the adapter (30) for holding the teeth in the right position in the case of a full set of lower jaw dentures, with a spherically domed holder (77), whose position can be fixed in relation to the lower jaw model (1), and with a sagittal and transversal compensation curve (78a and 78b),

— in which two inserts (79) which can be rotated, displaced and locked inside the dome, can be inserted to adjust the central fissure line (80) and

— in which a tooth template (70) made up of a false tooth (91) with a holding arm (92) can be placed. This template is adjustably held with the mesial edge (91a) of the false tooth (91) on a centre line (93) on the holder (77) in a sagittal direction and it can be locked in position.

2. Apparatus as per claim 1, characterised by the fact that the levelling table (9) is triangular in shape, grips with a triangular tip between the two columns (4) accommodated in the last third of the base plate (3) with a space between them and is supported in all three corners by vertical levelling screws (11) fixed to the base plate, making both its inclination and height adjustable,

That the levelling table (9) has a hole (18) drilled in each of its three corners which is larger in diameter than the levelling screws (11), surrounds the levelling screws (11), which are formed of threaded pins, with these holes (18), with a certain amount of play, and has an upper and lower spherical bearing (19) around each hole (18) into which is inserted an upper and a lower groove nut (20), screwed on to the levelling screw (11) and with a spherical extension (21),

That the levelling screw (11) in the back corner of the triangular levelling table (9) is longer than the two front levelling screws (11) and around this longer levelling screw a compression spring (22) acting on a spherical extension (21) is accommodated, which abuts on a cap nut (23) screwed on to the top end of the levelling screw (11), whereby this cap nut (23) at the same time forms a support for the folding arm (6) rotated upwards and towards the back (Figs. 1 to 6 and 10).

3. Apparatus as per claim 2, characterised by the fact that the levelling table (9) grips the levelling screw (11) by a slot (18a) cut in the corner of the triangle and is held by this corner between the lower groove nut (20) and the upper spherical extension (21) which is subjected to spring tension, and in the rear corner of the levelling table (9) the slot (18a) holding the levelling screw (11) is cut with a swallow-tail cross section, into which a spherical bearing (19) providing a central support fits from below (Fig. 3a).

4. Apparatus as per claims 1 to 3, characterised by the fact that the levelling table (9) is fitted with gimbal-mountings into the levelling screws (11) and in relation to the base plate (3) by means of a telescopic guide (14) accommodated between the two front levelling screws (11) on the vertical axis (12) of the symphysis (13), whereby the telescopic guide (14) has a casing (15) fixed to the base plate (15), in which a vertical guide pin (16) mounted on gimbals with a ball head (17) in the levelling table (9) fits and can be moved about, whereby the ball-head (17) is mounted in the levelling table with a very narrow clearance under the top side of the levelling table (9) (Fig. 10).

5. Apparatus as per claim 1, characterised by the fact that the folding arm (6) is mounted with one long end in the horizontal axis (5) between the vertical columns (4) so that it can rotate and at the other long end has a support pin at right angles to the folding arm (6), supported by the base plate (3) or a support bearing (27) on the side of the base plate when the folding arm is in the operational or down position and which holds the arm (6) in a horizontal position at a fixed height, and that in the folding arm (6) there is a knurled screw (28) and two fixing pins (29) are designed on the underside of the folding arm to obtain a removable fixing of the plinth (8) or of the stamping plate (7, 64) in the right position with the adapter (30) (Figs. 2, 11, 12 and 15).

6. Apparatus as per claim 1, characterised by the fact that at one end the adjusting key (10) is held in slot-like guides (34) in the two columns and at the other by a support pin (33) supported on the base plate (3), being maintained on a horizontal plane above the levelling table (9), whereby in the area of an insertion guide (34) there is a fixing screw (35) to fix the adjusting key. (Figs. 1, 3 to 6).

7. Apparatus as per claim 6, characterised by the fact that the adjusting key (10) has an adjusting track (31) running parallel with the folding arm, and at one of its long ends there is a crosswise fixing strip (32) which fits into the insertion guides and at the other end there is the vertical support pin (33).

8. Apparatus as per claims 1, 6 and 7, characterised by the fact that the adjusting pin (37) can be fixed into an upright guide casing (38) fixed to the adjusting track (31) at an adjustable height and by means of a fixing screw (40) and has a millimetre scale (39), whereby the adjusting pin (37) is accommodated with its adjusting point (37a) on the vertical axis (12) of the symphysis (13) and the adjusting point (37a) is formed of a straight or curved pin or a fork (Figs. 3, 5 to 7).

9. Apparatus as per claims 1, 6 to 8, characterised by the fact that the gauge (41) of the adjusting key (10) is basically trapezoidal in shape, with the two sides of the trapezoid formed like knives and towards the columns (4) forming measuring edges (42) to define the trigonum (36), and that the trapezoidal gauge (41) of the adjusting key (10) can be displaced in the longitudinal direction of the adjusting track (31) and can be locked in the set position by means of an infinitely adjustable knurled bolt (43) in a slot (44) in the adjusting track (31), and also that the gauge (41) is bearing mounted so that it can be displaced by means of a countersunk slot (41a) which is wider than the width of the adjusting track (31) and on the horizontal plane can rotate within an angle, preferably of ± 5° (Figs. 7, 7a).

10. Apparatus as per claim 1, characterised by the fact that the adjusting key (57) has a bearing track (59) which can be locked on to the adapter (30) or removed, and which runs along the longitudinal axis (56) of the levelling table (9) and the base plate (3), and in one long end area of which a basically V-shaped gauge (60) with a knife-like measuring edge (60a) on the outer edges of both arms of the V is fitted in a longwise slot (61) by means of a spring-loaded swivel axle (62), so that it can be smoothly displaced and can pivot around the swivel axle in a horizontal plane and, once it is in the set position it can lock automatically; at the other long end there is an adjusting pin (37), whose height can be adjusted, with an adjusting point (37a) (Figs. 8 and 9).

11. Apparatus as per claim 1, characterised by the fact that the adjusting key (67) has a support rail (71) running along the longitudinal axis (56) of the levelling table (9) and the base plate (3), on one long end of which there is a guide strip which can be rotated around a spring-loaded swivel axle (73) in a horizontal plane and which, with the swivel axle (73) in a longitudinal slot (74) of the bearing track (71) can be smoothly adjusted and can lock automatically once it is in the set position, held by knife-like guide edges (72a) angled downwards (Figs. 18 and 19).

12. Apparatus as per claim 11, characterised by the fact that on the other long end of the support rail (71) an adjusting pin (37) with an adjusting point (37a) is fixed, to which a display needle (76) for the height of the bite level is allocated, removably inserted in a supporting bar (26) of the folding arm (6) (Fig. 18).

13. Apparatus as per claim 1, characterised by the fact that the stamping plate (7, 64) is basically parabolic in shape and is designed for the upper and/or lower jaw model (1, 47) and is fitted as a bite template with fixing pins (7a) to ensure that a centric chart (2) is taken off (Figs. 11, 13 and 14).

14. Apparatus as per claim 1, characterised by the fact that the auxiliary device (68) forms a dome in three sections, in which an insert (79) is removably inserted on the holder (77) for each right and left central fissure line (80), either alternately or simultaneously, and this insert can be tilted, displaced and stopped within the dome (Figs. 20 to 27).

15. Apparatus as per claim 14, characterised by the fact that the holder (77) is formed of a bridge comprising two bridge plates spaced apart, one above the other, linked together and forming together an insert slot (77b) for the inserts (79), whereby the two bridge plates (77a) display a plate-shaped spacer (81) which forms the insert slot (77b) in the middle of the holder (77), whose height corresponds to the force of an inserting arm (79b) for the alternate insertion of an insert (79) or of two inserting arms (79b) for the simultaneous insertion of two inserts (79) (Figs. 25, 26 and 27).

16. Apparatus as per claims 14 and 15, characterised by the fact that the holder (77) has a screw with a countersunk head (82) and a hand nut (83) at both long ends, which holds the two bridge plates (77a) together and exerts a clamping action on the inserting arms (79b), whereby the bolts with the countersunk head (82) are flush with the underside of the dome and the holder (77) is fixed by means of a screw with a countersunk head (84) flush with the underside of the dome underneath an adapter (30) and can be fixed with the latter in an instrument holder (66).

17. Apparatus as per claims 14 to 16, characterised by the fact that each insert (79) is formed of a rule (79a) which can be set on the central fissure line (80), with two inserting arms angled at the long ends of the rule and clamped into the insert slot (77b), such that they can be smoothly displaced and swivelled and thus at least the rule (79a) of each insert (79) displays at least one area of transparent material, such as strips of transparent plastic, preferably made of transparent plastic, and on the underside of the transparent rule (79a) or rule area there is a marking line (80a), such as a coloured line, a groove, a ridge (rib) or similar, which has to be aligned with the Pound line (80). This line extends along the length of the rule (79a) and the holder (77) has a line marking (69) along its length in the form of a coloured line, a groove, raised edge or similar (Fig. 21).

18. Apparatus as per claim 1, characterised by the fact that the mesial edge (91a) forms a positioning area for the right or left tooth 1 and the tooth template (70) displays a right or left inserting arm (92) for the right and left insert on each false tooth (91) (Figs. 29 to 31).

19. Apparatus as per claim 18, characterised by the fact that the middle line (93) on the prosthesis axis of symmetry is formed of a groove in the lower bridge plate (77a) of the holder (77) and thus the inserting arm (92) of the tooth template (70) forms a stop edge acting in conjunction with a longitudinal edge (77c) of the holder (77), limiting the depth of insertion and keeping the mesial edge (91a) on the middle line (93) in any position adjusted in a sagittal direction.

20. Apparatus as per claims 18 and 19, characterised by the fact that the inserting arm (92) runs at an angle, preferably a right angle, to the mesial edge (91a) and forms a single unit with the false tooth (91), made of plastic, metal or similar.

## Revendications

1. Appareil de fabrication de prothèses totales des mâchoires supérieure et inférieure comprenant

a) un porte-instrument (66), composé d'une plaque de base (3), qui supporte deux colonnes (4) verticales, et d'un bras battant (6) pivotant autour d'un axe horizontal (5),

b) une table de nivellement (9), disposée sur la plaque de base (3) du porte-instruments et réglable, verticalement et obliquement, en continu, laquelle est destinée à recevoir un modèle de mâchoire (1, 47),

c) une clef d'ajustage (resp. 10 et 57) de modèle de mâchoire inférieure, fixable, de façon amovible, directement ou indirectement sur les colonnes (4), du porte-instrument (66), au-dessus de la table de nivellement (9), laquelle clef est pourvue d'une cheville de réglage (37) réglable en hauteur, destinée à déterminer le point de symphyse (13), et d'un gabarit (41) orientable, réglable à niveau horizontal, destinée à la détermination du trigone (36),

d) un plateau-matrice (resp. 7 et 64) fixé de façon amovible sur le bras battant (6), à l'aide d'un adapteur (30) et destiné à limiter en hauteur les tubercules de l'occlusion (52) des mâchoires inférieure ou supérieure,

e) une clef d'ajustage de modèle de mâchoire supérieure (67), fixée, de façon amovible, sur le bras battant (6), à l'aide d'un adapteur (300), laquelle clef (67) présente une arête d'ajustage (72a), réglable selon les deux plis faisant soufflets vers la gorge (75),

f) un auxiliaire de mise en place (68), fixé de façon amovible sur le bras battant (6) du porte-instrument (66), à l'aide d'un adapteur (30) et qui, servant à la mise en place correcte des dents de prothèses totales de mâchoire inférieure, est équipé d' un dispositif de maintien (77), voûté en calotte, pouvant être fixé en position adéquate vis-à-vis du modèle de mâchoire inférieure (1) et présentant une courbe de compensation sagittale et transversale (78a et 78b),

– dans lequel deux inserts (79), pivotables, déplaçables et blocables à l'intérieur de la calotte, peuvent être placés, aux fins de positionnement de la ligne de conduite centrale de repérage des fissures (80) et

– dans lequel un modèle dentaire (70), formé d'une pseudo-dent (91) avec bras enfichable (92), peut être mis en place et est maintenu dans le sens sagittal, tout en étant ajustable, et bloqué à l'aide de la mési-arête (91a) de la pseudo-dent (91), sur une ligne médiane (93), prévue sur le dispositif de maintien (77).

2. Appareil selon revendication 1, caractérisé par le fait que la table de nivellement (9) présente une forme de base triangulaire, une pointe du triangle, qu'elle forme, pénétrant entre les deux colonnes (4), disposées parallèlement, à intervalle l'une de l'autre sur le dernier tiers de la plaque de base (3), et est soutenue dans les trois angles, étant réglable obliquement et verticalement, par des broches de mise à niveau (11), fixées sur la plaque de base (3),

et que la table de nivellement (9) est pourvue, dans chacun de ses trois angles, d'une forure (18), dont le diamètre est supérieur au diamètre des broches de mise à niveau (11), ces forures (18) entourant, avec un certain jeu, les broches de mise à niveau (11), constituées par des boulons filetés, et que chaque forure (18) est ceinte de paliers arqués (19) supérieur et inférieur, dans lesquels un écrou moleté (20), supérieur et inférieur, vissé sur les broches de mise à niveau (11), s'engage, respectivement, avec un épaulement voûté (21),

que la broche de mise à niveau (11), située dans l'angle postérieur du triangle, formé par la table de nivellement (9), est plus longue que les deux broches de mise à niveau (11) antérieures et qu'un ressort de pression (22), agissant sur un épaulement voûté (21), est disposé autour de cette broche de mise à niveau (11) plus longue, la butée de ce ressort de pression (22) étant formée par un écrou borgne (23), vissé sur l'extrémité supérieure de la broche de mise à niveau (11) et étayant, simultanément, le bras battant (6) pivotable vers le haut et le bas (fig. 1 à 6 et 100).

3. Appareil selon revendication 2, caractérisé par le fait que la table de nivellement (9) encercle avec une fente (18a), pratiquée dans sa pointe triangulaire, la broche de mise à niveau (11), et est maintenue, par cette pointe triangulaire, entre l'écrou moleté inférieur (20) et le palier (19), soumis à la pression du ressort, et que la fente (18a), pratiquée dans la pointe triangulaire postérieure de la table de nivellement (9) et encerclant la broche de mise à niveau (11), présente une section transversale en queue d'aronde , dans laquelle un épaulement voûté (21), mord, d'en-bas, conférant à la table de nivellement (9) un appui centré (fig. 3a).

4. Appareil selon revendication 1, caractérisé par le fait que la table de nivellement (9) est montée cardaniquement dans les broches de mise à niveau (11) et vis-à-vis de la plaque de base (3), à l'aide d'un guide télescopique (14), disposé sur ion axe vertical (12) du point de symphyse (13), entre les deux broches de mise à niveau (11), le guide télescopique (14) présentant une douille de guidage (15), fixée sur la plaque de base (3), douille de guidage (15), dans laquelle une goupille de positionnement (16) verticale, pendue cardaniquement dans la table de nivellement (9) à l'aide d'une tête sphérique (17) s'engrène, déplaçant en hauteur, la tête sphérique (17) étant montée dans la la table de nivellement (9), sous la surface de celle-ci.

5. Appareil selon revendication 1, caractérisé par le fait que le bras battant (6) est monté, pivotant, avec une extrémité longitudinale, dans l'axe horizontal (5), entre les colonnes (4) verticales, et présente, à son autre extrémité longitudinale, un boulon-support (26) perpendiculaire au bras battant (6) et s'appuyant sur la plaque de base (3) ou sur un palier d'appui (27) de la plaque de base (3) lorsque le bras battant (6) est rabattu en bas, et maintenant ce dernier en position horizontale à une hauteur déterminée, et qu'une vis moletée (28) est prévue dans le bras battant (6), la face inférieure de ce dernier étant équipée de deux goupilles de fixation (29) aux fins de fixation amovible respective du socle (8) ou de la plaque-matrice (7, 64) en position correcte, avec adapteur (30) (fig. 2, 11, 12 et 15).

6. Appareil selon revendication 1, caractérisé par le fait que la clef d'ajustage (10) est maintenue horizontalement, au-dessus de la table de nivellement (9), à une extrémité, dans des guidages d'emboîtement (34) en forme de fentes, pratiquées dans les deux colonnes (4), et, à l'autre extrémité, par un boulon-support (33), prenant appui sur la plaque de base (3), une vis de serrage (35) étant prévue dans le secteur d'un guidage d'emboîtement (34) en vue de la fixation de la clef d'ajustage (fig. 1,3 à 6).

7. Appareil selon revendication 6, caractérisé par le fait que la clef d'ajustage (10) présente un rail de réglage (31), s'étendant dans le sens longitudinal du bras battant (6), lequel rail de réglage (31) est pourvu, à une extrémité longitudinale, d'une barre de fixation (32) s'étendant transversalement et s'enclenchant dans les guidages d'emboîtement, et, à l'autre extrémité, du boulon-support (33).

8. Appareil selon les revendications 1, 6 et 7, caractérisé par le fait que la cheville de réglage (37) est fixable, étant réglable en hauteur, à l'aide d'une vis de serrage (40), dans une douille de positionnement (38) verticale, fixée sur le rail de réglage (31), et présente une graduation en mm (39), la cheville de réglage (37) étant disposée de sorte que son point de réglage (37a) se trouve sur l'axe vertical (12) du point de symphyse (13), et le point de réglage (37a) étant constitué par une pointe droite ou courbée ou une fourche (fig. 3, 5 à 7).

9. Appareil selon les revendications 1, 6 à 8, caractérisé par le fait que le gabarit (41) de la clef d'ajustage (10) a une forme de base trapézoïdale, les deux côtés latéraux du trapèze étant conçus sous forme de lames de couteaux et formant, des arêtes de mesure (42) se rapprochant l'une de l'autre en direction des colonnes (4), en vue de déterminer le trigone (36), que le gabarit (41) en forme de trapèze de la clef d'ajustage (10) est prévu déplaçable, dans le sens longitudinal du rail de réglage (31), et est fixable, en continu, dans la position réglée, à l'aide d'une vis moletée (43), qui a prise dans une fente (44) du rail de réglage (31), et que le gabarit (41) est déplaçable sur le rail de réglage (31) à l'aide d'une fente (41a) fraisée, dont la largeur est supérieure à la largeur du rail de réglage (31), et est monté, en plan horizontal, étant orientable, de préférence, dans un rayon d'angle de +/- 5° (fig. 7, 7a).

10. Appareil selon revendication 1, caractérisé par le fait que la clef d'ajustage (57) présente un rail-support (59) s'étendant sur l'axe longitudinal (56) de la table de nivellement (9)5 et de la plaque de base (3) et pouvant être fixé, de façon amovible, à l'adapteur (30), rail-support (59) dans l'une des extrémités longitudinales duquel un gabarit (60) de forme fondamentale en "V", présentant une arête de mesure (60a) sur chacun des bords externes des deux branches du "V", peut être déplacé en continu dans une fente oblongue (61) à l'aide d'un axe de pivotement (62) chargé par ressort, et pivoté, horizontalement, autour de l'axe de pivotement (62), se bloquant automatiquement dans la position réglée, et à l'autre extrêmité longitudinale duquel une cheville de réglage (37), réglable en hauteur, avec pointe de réglage (37a) est montée (fig. 8 et 9).

11. Appareil selon revendication 1, caractérisé par le fait que la clef d'ajustage (67) posséde un rail de support (71) s'étendant sur l'axe longitudinal (56) de la table de nivellement (9) et de la plaque de base (3), rail de support (71) à l'une des extrémités longitudinales duquel une barre d'ajustage (72), orientable, sur plan horizontal, autour d'un axe de pivotement (73) chargé par ressort et déplaçable en continu, avec l'axe de pivotement (73), dans une fente oblongue (74), et se bloquant automatiquement dans la position réglée, est maintenue avec une arête d'ajustage (72a) en forme de lame de couteau, pliée vers le bas (fig. 18 et 19).

12. Appareil selon revendication 11, caractérisé par le fait qu'une cheville de réglage (37) avec point de réglage (37a) est fixée à l'autre extrémité lomgitudinale du rail de support (71), cheville de réglage (37) à laquelle un indicateur (76) amovible, enfichable dans une aile d'appui (26) du bras battant (6) est affecté en vue de déterminer la hauteur du niveau de mastication (fig. 18).

13. Appareil selon revendication 1, caractérisé par le fait que le plateau-matrice (7, 64) a une forme fondamentale parabolique et est conçu pour les modèles de mâchoires inférieure et/ou supérieure (1, 47), et est équipé, également en tant que gabarit d'occlusion, de pointes de fixation (7a) en vue du prélèvement d'une plaque d'enregistrement de centrique (2) (fig. 11, 13 et 14),

14. Appareil selon revendication 1, caractérisé par le fait que l'auxiliaire de mise en place (68) forme une calotte divisée en trois parties, où un insert (79), pouvant être pivoté, déplacé et bloqué à l'intérieur de la voûte de la calotte, est fixable, de façon amovible, sur un dispositif de maintien (77), alternativement ou simultanément, pour la ligne centrale de repérage des fissures droite et gauche (fig. 20 à 27).

15. Appareil selon revendication 14, caractérisé par le fait que le dispositif de maintien (77) consiste en une entretoise, composée de traverses (77a), disposées, à intervalle, l'une au-dessus de l'autre, reliées l'une à l'autre et formant, entre elles, une fente d'enfichage (77b) pour les inserts (79), les deux traverses (77a) présentant, dans le secteur médian du dispositif de maintien (77), un écarteur (81), en forme de plaque, qui constitue la fente d'enfichage (77b), écarteur dont la hauteur correspond à l'épaisseur d'un bras (79b) pour enficher, alternativement, un insert (79) ou de deux bras (79b) pour enficher simultanément deux inserts (79) (fig. 25, 26 et 27).

16. Appareil selon revendications 14 et 15, caractérisé par le fait que les deux extrémités longitudinales du dispositif de maintien (77) sont pourvues, chacune, d'un boulon à tête fraisée (82) avec écrou moleté (83), réunissant les deux traverses (77a) et exerçant un effet de serrage sur les bras d'insertion (79b), les boulons à tête fraisée (82) formant un seul niveau avec la face inférieure de la calotte et le dispositif de maintien (77) étant fixé sous un adapteur (30), à l'aide d'un boulon à tête fraisée (84), qui forme une seul niveau avec la partie inférieure de la calotte, le dispositif de maintien (77) et l'adapteur (30) pouvant être fixé ensemble dans un porte-instrument (66).

17. Appareil selon revendications 14 à 16, caractérisé par le fait que chaque insert (79) est formé par une règle (79a), ajustable sur la ligne de conduite centrale de repérage des fissures (80), avec deux bras (79b), partant, angulairement, des deux extrémités longitudinales de cette règle et serrés dans la fente d'enfichage (77b), dans laquelle ils peuvent être déplacés et pivotés en continu, la règle (79a) de chaque insert (79), au moins, présentant une zone transparente, par ex. une bande de matière plastique translucide, ou, de préférence, consistant en matière plastique transparente, et qu'une ligne de marquage (80a), par ex. une ligne en couleur, une rainure, une saillie (nervure) ou analogue, est prévue, s'étendant dans le sens de la longueur de la règle, sur la face inférieure de la règle transparente (79a) ou de la zone transparente de la règle, laquelle ligne de marquage (80a) pouvant être amenée en coïncidence avec la ligne ligne de conduite centrale de repérage des fissures (Pound)(80), et que le dispositif de maintien (77) possède une marque linéaire (69), sous forme de ligne de couleur, rainure, bord surélevé ou analogue, s'étendant sur son axe longitudinal (fig. 21).

18. Appareil selon revendication 1, caractérisé par le fait que la mési-arête (91a) forme une surface d'incidence pour la dent 1 droite ou gauche et que le modèle dentaire (70) présente, pour l'insertion droite et gauche, un bras enfichable (92) droit ou gauche (fig. 29 à 31).

19. Appareil selon revendication 14, caractérisé par le fait que la ligne médiane (93), située sur l'axe symétrique de la prothèse, est formée par une sorte de rainure, fraisée dans la traverses (77a) inférieure du dispositif de maintien (77), et que, ce faisant, le bras enfichable (92) du modèle dentaire (70) forme une butée (92a) agissant en concours avec un bord longitudinal (77c) du dispositif de maintien (77), limitant la profondeur d'insertion et maintenant la mési-arête (91a) sur la ligne médiane (93) dans toute position ajustée dans le sens sagittal.

20. Appareil selon revendications 18 et 19, caractérisé par le fait que le bras enfichable (92) s'étend angulairement, de préférence à angle droit , par rapport à la mési-arête (91a) et est exécutée, d'une seule pièce avec la pseudo-dent (91), en matière plastique, métal ou analogue.

Fig. 1

Fig. 2

Fig. 3a

Fig. 3

Fig. 4

Fig. 5

Fig. 6

Fig. 7

Fig. 7a

Fig. 8

Fig. 9

Fig.10

Fig.11

Fig.11a

Fig.12

Fig. 14

Fig.13

30

64  65

64

30

65

28

29        29        6

Fig. 15

8

5

26                                                    4

34        35

23

11

20

9

27

20

45                              3        66

Fig.16

Fig.17

Fig.18

Fig.19

Fig.20

Fig.23

Fig.25

Fig.24

Fig.21

Fig.22

Fig.26

Fig.27

Fig. 29

Fig. 30

Fig. 31

Fig. 28

Fig. 32

Fig. 32a